# EUROPÄISCHE PATENTSCHRIFT

(11) **EP 1 914 526 B1**
(45) Veröffentlichungstag und Bekanntmachung des Hinweises auf die Patenterteilung: **19.07.2017**
(21) Anmeldenummer: 08000610.9
(22) Anmeldetag: 15.02.2006
(51) Int. Cl.: G01F 1/84, G01F 15/18

(54) **Meßaufnehmer vom Vibrationstyp**
Measuring sensor of vibration type
Capteur de mesure du type de vibration

(30) Priorität: 25.02.2005 EP 05004166
(43) Veröffentlichungstag der Anmeldung: 23.04.2008
(62) Teilanmeldung aus: 06708290.9
(73) Patentinhaber: Endress+Hauser Flowtec AG, 4153 Reinach (BL) (CH)
(72) Erfinder: Bitto,Ennio, 4147 Aesch (BL) (CH); Lorenz,Rainer, 79540 Lörrach (DE); Drahm,Wolfgang, Dr., 85435 Erding (DE)
(74) Vertreter: Andres, Angelika Maria

(56) Entgegenhaltungen:
- DE-A1- 10 003 784
- DE-A1- 19 936 008

## Beschreibung

Die Erfindung betrifft einen Meßaufnehmer vom Vibrationstyp mit einem Verbund-System, das ein, insb. aus Metall bestehendes, erstes Bauteil und ein mit diesem verbundenes, insb. ebenfalls aus Metall bestehendes, zweites Bauteil aufweist.

In der industriellen Meß- und Automatisierungstechnik werden zum hochgenauen Erfassen von Prozeß-Meßgrößen in Leitungen, insb. Rohrleitungen, strömender Medien, insb. zum Erfassen strömungsdynamischer und/oder rheologischer Meßgrößen, oftmals In-Line-Meßgeräte mit einem Meßaufnehmer vom Vibrationstyp verwendet, der wenigstens ein mit der mediumsführenden Rohrleitung kommunizierendes, im Betrieb vibrierendes Meßrohr aufweist. Aufbau, Wirkungsweise sowie Anwendungsmöglichkeiten solcher Meßaufnehmer vom Vibrationstyp sind u.a. in der US-A 41 27 028, der US-A 45 24 610, der US-A 47 68 384, der US-A 47 93 191, der US-A 48 23 614, der US-A 52 53 533, der US-A 56 10 342, der US-A 57 96 011, der US-A 57 05 754, der US-A 60 06 609, der US-A 60 47 457, der US-B 61 68 069, der US-B 63 14 820, der US-B 63 52 196, der US-B 63 74 478, der US-B 63 97 685, der US-B 64 50 042, der US-B 64 87 917, der US-B 65 16 674, der US-B 65 19 828, der US-B 65 23 421, der US-B 65 98 281, der US-B 66 66 098, der US-B 66 98 644, der US-B 67 11 958, der US-A 67 69 163, der US-B- 68 51 323, der WO-A 03/048693, WO-A 05/050144 oder der eigenen nicht vorveröffentlichten deutschen Anmeldung DE102004048765.0 ausführlich und detailliert beschrieben.

Meßaufnehmer vom Vibrationstyp dienen bekanntlich dazu, im Zusammenspiel mit einer daran angeschlossenen Meßgerät-Elektronik in dem momentan im wenigstens einen Meßrohr geführten Medium mit der zu messenden Prozeß-Meßgröße entsprechend korrespondierende Reaktionskräfte, wie z.B. mit einem Massendurchfluß korrespondierende Corioliskräfte, mit einer Dichte korrespondierende Trägheitskräfte oder mit einer Viskosität korrespondierende Reibungskräfte etc., zu erzeugen und von diesen abgeleitet ein mit der der Prozeß-Meßgröße, beispielsweise dem jeweiligen Massedurchfluß, der jeweilige Viskosität und/oder der jeweilige Dichte des Mediums, entsprechend korrespondierendes Meßsignal zu erzeugen. Das wenigstens eine Meßrohr des Meßaufnehmers ist dafür üblicherweise mediumsdicht, insb. druckdicht, und zumeist auch dauerhaft in den Verlauf der das Medium führenden Rohrleitung, z.B. mittels entsprechender Flanschanschlüsse, eingesetzt. Zum schwingfähigen Haltern des wenigstens eine Meßrohrs ist ferner ein im Vergleich dazu zumeist sehr biegesteif ausgeführten, rohr- oder rahmenförmigen, Trägerelement, beispielsweise aus Stahl, vorgesehen, das ein- und auslaßseitig an das jeweilige Meßrohr mechanisch gekoppelt, beispielsweise direkt daran fixiert, ist. Das Trägerelement kann, wie bei derartigen Meßaufnehmern üblich und auch dem oben genannten Stand der Technik ohne weiteres entnehmbar, mittels entsprechend von außen angebrachten Abdeckungen, wie z.B. rohrabdeckenden Kappen oder seitlich angebrachten Blechen, zu einem den Meßaufnehmer einhausenden Meßaufnehmer-Gehäuse komplettiert oder auch selbst als Meßaufnehmer-Gehäuse ausgebildet sein.

Zum Antreiben des wenigstens einen Meßrohrs umfassen Meßaufnehmer der beschriebenen Art weiters eine mit der jeweiligen Meßgerät-Elektronik elektrisch verbundene Erregeranordnung mit einem auf das Meßrohr mechanisch einwirkenden, insb. elektro-dynamischen oder elektromagnetischen, Schwingungserreger. Im Betrieb wird die Erregeranordnung von der Meßgerät-Elektronik mittels entsprechender Erregersignale in geeigneter Weise so angesteuert, daß das Meßrohr zumindest temporär Vibrationen, insb. Biegeschwingungen und/oder Torsionsschwingungen, ausführt. Des weiteren ist eine Schwingungsmeßsignale liefernden Sensoranordnung vorgesehen, die zumindest bei Verwendung des Meßaufnehmers als Coriolis-Massendurchfluß-Meßaufnehmer wenigstens zwei voneinander beabstandete, auf einlaß- bzw. auslaßseitige Vibrationen des Meßrohrs reagierende Sensorelemente aufweist.

Neben der Möglichkeit des gleichzeitigen Messens mehrerer solcher Prozeßgrößen, insb. des Massendurchflusses, der Dichte und/oder der Viskosität, mittels ein und desselben Meßgeräts besteht ein weiterer wesentlicher Vorteil von In-Line-Meßgeräten mit Meßaufnehmern vom Vibrationstyp u.a. darin, daß sie innerhalb vorgegebener Betriebsgrenzen eine sehr hohe Meßgenauigkeit bei vergleichsweise geringer Störempfindlichkeit aufweisen. Darüber hinaus kann ein solches Meßgerät für praktisch jedes fließ- oder strömunsgfähige Medium verwendet und in einer Vielzahl verschiedenster Anwendungsbereiche der Meß- und Automatisierungstechnik eingesetzt werden.

Bei In-Line-Meßgeräten der beschriebenen Art, die als Coriolis-Massendurchflußmesser eingesetzt werden, ermittelt die jeweilige Meßgerät-Elektronik im Betrieb u.a. eine Phasendifferenz zwischen den beiden von den Sensorelementen gelieferten Schwingungsmeßsignalen und gibt die Meßgerät-Elektronik an ihrem Ausgang ein davon abgeleitetes Meßwertsignal ab, das einen mit dem zeitlichen Verlauf des Massendurchflusses korrespondierenden Meßwert darstellt. Soll, wie bei derartigen In-Line-Meßgeräten üblich, auch die Dichte des Mediums gemessen werden, so ermittelt die Meßgerät-Elektronik dafür anhand der Schwingungsmeßsignale weiters eine momentane Schwingfrequenz der Meßrohre. Außerdem kann beispielsweise auch die Viskosität des Mediums anhand der zur Aufrechterhaltung von den Meßrohr-Schwingungen erforderlichen Leistung, insb. einem entsprechenden Erregerstrom für die Erregeranordnung, gemessen werden.

Zum Betrieb des Meßaufnehmers, insb. auch zur Weiterverarbeitung oder Auswertung des wenigstens einen Meßsignals, ist dieser, wie bereits angedeutet, mit einer entsprechenden Meßgerät-Elektronik elektrisch verbunden. In der industriellen Meß- und Automatisierungstechnik ist diese Meßgerät-Elektronik zudem oftmals über ein angeschlossenes Datenübertragungs-System mit anderen Meßgeräten und/oder mit einem entfernten Zentralrechner verbunden, wohin sie die Meßwertsignale, z.B. via digitalen Daten-Bus, sendet. Als Datenübertragungs-Systeme dienen hierbei oftmals, insb. serielle, Bus-Systeme, wie z.B. PROFIBUS-PA, FOUNDATION FIELDBUS sowie die entsprechenden Übertragungs-Protokolle. Mittels des Zentralrechner können die übertragenen Meßwertsignale weiterverarbeitet und als entsprechende Meßergebnisse z.B. auf Monitoren visualisiert und/oder in Steuersignale für entsprechende Stellglieder, wie z.B. MagnetVentile, Elektro-Motoren von Pumpen etc., umgewandelt werden. Zur Aufnahme der Meßgerät-Elektronik umfassen solche In-Line-Meßgeräte ferner ein Elektronik-Gehäuse, das, wie z.B. in der WO-A 00/36379 vorgeschlagen, vom Meßaufnehmer entfernt angeordnet und mit diesem nur über eine flexible Leitung verbunden sein kann oder das, wie z.B. auch in der EP-A 1 296 128 oder der WO-A 02/099363 gezeigt, direkt am Meßaufnehmer, insb. auf dem bereits erwähnten Meßaufnehmer-Gehäuse, angeordnet ist.

Bei Meßaufnehmern der beschriebenen Art haben sich im wesentlichen zwei Arten von Rohrformen am Markt etabliert, nämlich einerseits im wesentlichen gerade Meßrohre und andererseits im wesentlichen in einer Rohrebene gebogene Meßrohre, unter denen die im wesentlichen S-, U- oder V-förmigen die wohl am meisten verwendeten sind. Insbesondere bei dem Messen von Massedurchflüssen dienenden Coriolis-Massedurchfluss-Meßaufnehmern werden bei beiden Arten von Rohrformen aus Symmetriegründen zumeist zwei im Ruhezustand im wesentlichen parallel zueinander verlaufende und zumeist auch parallel vom Medium durchströmte Meßrohre verwendet. Hierzu kann exemplarisch auf die US-A 41 27 028, die US-A 47 68 384, die US-A 47 93 191, die US-A 56 10 342, US-A 57 96 011 oder US-B 64 50 042 auf die verwiesen werden.

Neben Meßaufnehmern mit einer solchen Doppel-Meßrohranordnung sind aber auch Meßaufnehmer mit einem einzigen geraden oder gebogenen Meßrohr seit längerem am Markt erhältlich. Derartige Meßaufnehmer vom Vibrationstyp mit einem einzigen Meßrohr sind z. B. in der US-A 45 24 610, der US-A 48 23 614, der US-A 52 53 533, der US-A 60 06 609, der US-A 60 47 457, der US-A 61 68 069 der US-B 63 14 820, der US-B 63 97 685, der US-B 64 87 917, der US-B 65 16 674, der US-B 66 66 098, der US-B 66 98 644, der US-B 67 11 958, der WO-A 03/048693 oder der erwähnten eigenen Anmeldung DE10354373.2 beschrieben. Jeder der darin in der gezeigten Meßaufnehmer umfaßt u.a. ein ein Einlassende und ein Auslassende aufweisenden, zumindest zeitweise vibrierenden Meßrohr, beispielsweise aus Stahl, Titan, Tantal oder Zirkonium oder entsprechenden Legierungen, zum Führen des zu messenden Mediums, wobei das Meßrohr zum Hindurchströmenlassen des Mediums über ein in das Einlassende mündendes erstes Rohrsegment und über ein in das Auslassende mündendes zweites Rohrsegment mit einer angeschlossenen Rohrleitung kommuniziert und wobei das Meßrohr im Betrieb mechanische Schwingungen um eine die beiden Rohrsegmente imaginär verbindende Schwingungsachse ausführt sowie mit einem zumeist sehr biegesteif ausgeführten, rohr- oder rahmenförmigen, Trägerelement, beispielsweise aus Stahl, zum schwingfähigen Haltern des Meßrohrs, das mittels eines ersten Übergangstücks am ersten Rohrsegment und mittels eines zweiten Übergangstücks am zweiten Rohrsegment fixiert ist.

Für den vorbeschriebenen Fall, daß es sich bei dem verwendeten Meßaufnehmer um einen solchen mit einem einzigen Meßrohr handelt, sind im Meßaufnehmer zudem ein, insb. schwingfähig im Meßaufnehmer-Gehäuse aufgehängtes, am Meßrohr fixierter Gegenschwinger vorgesehen, der abgesehen vom Haltern des Schwingungserregers und der Sensorelemente, dazu dient, das vibrierende Meßrohr von der angeschlossenen Rohrleitung schwingungstechnisch zu entkoppeln. Der zumeist aus kostengünstigem Stahl gefertigte Gegenschwinger kann dabei z.B. als ein koaxial zum Meßrohr angeordneter rohrförmiger Kompensationzylinder oder kastenförmiger Tragrahmen ausgeführt sein. Den referierten Merkmalsensembles der einzelnen vorbeschriebenen Meßaufnehmer ist noch hinzuzufügen, daß ein gerades Meßrohr bzw. gerade Meßrohre zumeist aus reinem Titan, einer Titan-Legierung mit hohem Titangehalt, reinem Zirconium oder einer Zirconium-Legierung mit hohem Zirconiumgehalt bestehen, da sich gegenüber Meßrohren aus rostfreiem Stahl, der bei geraden Meßrohren an sich ebenfalls möglich ist, üblicherweise kürzere Baulängen ergeben, und daß ein gebogenes Meßrohr bzw. gebogene Meßrohre bevorzugt aus rostfreiem Stahl bestehen, obwohl Titan oder Zirconium bzw. deren Legierungen auch hier als Material der Meßrohre möglich sind. Darüber hinaus ist aber beispielsweise auch die Verwendung von Tantal oder entsprechenden Tantal-Legierungen als Meßrohr-Material üblich.

Wie sich aus den vorangehenden Ausführungen unschwer ableiten läßt, weist praktisch jeder der im vorgenannten Stand der Technik gezeigten Meßaufnehmer wenigstens ein, insb. bi- oder polymetallisches, Verbund-System auf, das ein erstes Bauteil - beispielsweise das erste oder das zweite Endstück - und ein sich zumindest teilweise durch das erste Bauteil entlang einer gedachten Längsachse des Verbund-Systems erstreckendes zweites Bauteil - beispielsweise das Meßrohr - umfaßt, wobei üblicherweise das zweite Bauteil mit einer als Zylinderoberfläche ausgebildeten äußeren Oberfläche eine innere Oberfläche des ersten Bauteils flächig kontaktiert, die durch eine Innenwand einer sich innerhalb des ersten Bauteils erstreckenden Bohrung gebildet ist. Gleichermaßen sind aber auch Meßaufnehmer mit Doppel-Meßrohranordnung, wie insb. auch in der US-A 56 10 342 beschrieben, üblicherweise aus mehreren solcher, insb. bi-metallischen, Verbund-Systemen aufgebaut. Neben dem durch Meßrohr und Endstück gebildeten Verbund-System sind als weitere Beispiele für solche, insb. bimetallische, Verbund-Systeme im besonderen auch die Verbindung von Meßrohr und Flansch oder die Verbindung Flansch und Meßaufnehmer-Gehäuse zu nennen, vgl. hierzu auch die US-B 61 68 069, die US-B 63 52 196, die US-B 66 98 644. Des weiteren kann solch ein Verbund-System auch dadurch gebildet sein, daß, wie auch in der US-A 60 47 457 beschrieben, zwischen den Endstücken am Meßrohr zumindest ein kreisscheibenförmiger Metallkörper fixiert sein, der als ein Teil der Erregeranordnung dient bzw. mit dieser zusammenwirkt. Darüber hinaus können solche Metallkörper auch als Teil der Sensoranordnung oder als Koppler zwischen dem Meßrohr und dem ggf. vorgesehenen Gegenschwinger dienen.

An die in der industriellen Meß- und Automatisierungstechnik verwendeten Meßaufnehmer vom Vibrationstyp werden sehr hohe Anforderungen hinsichtlich der Meßgenauigkeit gestellt, die üblicherweise im Bereich von etwa 0,1% des Meßwerts und/oder 0,01% vom Meßendwert liegt. Dafür ist im besonderen eine sehr hohe Stabilität des Nullpunkts wie auch eine sehr hohe Robustheit der gelieferten Meßsignale erforderlich, besonders auch bei sich im Betrieb erheblich ändernden Umgebungs-, Einspann- und/oder Betriebsbedingungen. Wie bereits in den erwähnten US-A 56 10 342, der US-A 60 47 457, der US-A 61 68 069, der US-B 65 19 828, der US-B 65 98 281, der US-A 66 98 644, der US-B 67 69 163, der WO-A 03/048693 oder den erwähnten eigenen Anmeldungen DE102004048765.0 oder DE10354373.2 eingehend diskutiert, wird dabei auch der mechanischen Festigkeit, insb. der Wechselfestigkeit, eine erhebliche Bedeutung beigemessen, mit der die einzelnen Bauteile der vorgenannten im Meßaufnehmer gebildeten Verbund-Systeme aneinander fixiert sind. Bereits geringste Abweichung der Festigkeit der vorgenannten Verbundsysteme von der beim Kalibrieren vorgefundenen Situation können erhebliche, nicht mehr beherrschbare Schwankungen des Nullpunktes und/oder der Empfindlichkeit und somit praktisch unbrauchbare Meßsignale zur Folge haben. Üblicherweise können solche auf Entfestigungserscheinungen in den Verbund-Systemen zurückzuführenden Nullpunktsfehler lediglich durch Einbau eines neuen In-Line-Meßgeräts behoben werden. Einen besonderen Einfluß auf die Stabilität des Nullpunkts und/oder die Verfügbarkeit des Meßaufnehmers hat dabei, wie auch bereits in der US-A 56 10 342, der US-A 60 47 457, der US-B 61 68 069, der US-A 65 98 281, der US-B 66 34 241 oder auch der WO-A 03/048693 ausführlich diskutiert, die Art und Weise der Befestigung des Meßrohrs innerhalb des äußeren Trägerelements und dem ggf. vorhanden Gegenschwinger.

Traditionell werden die Bauteile solcher Verbund-Systeme zumindest anteilig aneinander stoffschlüssig durch Löt- und/oder Schweißverbindungen fixiert. So ist beispielsweise bereits in der US-A 48 23 614 beschrieben, daß die jeweilige Ende des einen Meßrohrs in eine jeweilige Bohrung eines einlaßseitigen bzw. eines auslaßseitigen Endstücks eingesteckt und darin durch stirnseitiges und rückseitiges Schweißen, Löten oder Hartlöten fixiert sind, vgl. die in einigen der Figuren zu sehenden Materialwülste. Die Endstücke sind ihrerseits im äußeren Trägerelement fixiert. Weiter Beispiele für solche Verbund-Systeme mit stoffschlüssigen Verbindungen sind u.a. auch in der US-B 61 68 069, der US-B 63 52 196, der US-B 65 19 828, der

US-B 65 23 421, der US-B 65 98 281, der US-B 66 98 644 oder der US-B 67 69 163 gezeigt.

Insbesondere für den oben beschriebenen Fall, bei dem das erste Bauteil als Koppler zwischen dem als zweites Bauteil ausgebildeten Meßrohr und einem als Gegenschwinger ausgebildeten dritten Bauteil dient, besteht insoweit bei der Herstellung des Meßaufnehmers jedoch oftmals ein erhebliches Problem darin, daß, bedingt durch die Bauart und/oder durch seitens der Anwendung an den Meßaufnehmer gestellte Anforderungen, wenigstens zwei Bauteile schwingungsfest miteinander zu verbinden sind, die aus voneinander verschieden Metallen, beispielsweise Stahl und Titan, bestehen. Bei bi-metallischen Verbund-Systemen, also bei solchen, bei denen wenigstens das erste Bauteil und das zweite Bauteil aus unterschiedlichen Metallen bestehen, lassen sich allfällige Entfestigungen des Verbundes unglücklicherweise nicht immer ohne weiteres sicher vermeiden. Wie beispielsweise der US-A 60 47 457, der US-B 61 68 069, der US-B 63 52 196, der US-B 65 98 281, der US-B 66 34 241, der US-B 65 23 421 oder der US-B 66 98 644 entnehmbar, können nämlich bei solchen bi-metallischen Verbund-Systemen Probleme hinsichtlich der Dauerfestigkeit der dann infolge mangelnder Verschweißbarkeit gezwungenermaßen verwendeten Lotverbindungen auftreten, die sich u.a. auf unzureichende Benetzung und/oder in radialer Richtung wechselnde mechanische Beanspruchungen der Fügestellen zurückführen lassen. Letzteres ist besonders den teilweise erheblich voneinander abweichenden Wärmeausdehnungen der Bauteile, sei es bei der Fertigung oder im Betrieb, geschuldet. Als ein weiteres Problem solcher stoffschlüssigen Lötverbindungen sind in der US-B 65 19 828 oder der US-B 65 98 281 auch materialverschleißende Schwingungsreibungen im Bereich der Fügestellen genannt.

Eine Möglichkeit zur Reduzierung dieses Risikos des Entfestigens solcher, beispielsweise von einem Meßrohr eines Coriolis-Massedurchfluss-Meßaufnehmers und einem darauf aufgeschobenen und fixierten Metallkörper gebildeten Verbund-Systeme kann gemäß der US-B 66 98 644 nunmehr darin bestehen, daß seitens der Bauteile in die Lötverbindung zusätzlich Druckspannungen eingebracht werden, wodurch die zwischen den Bauteilen eher großflächig ausgebildete Lötverbindung stabilisiert werden. Eine weitere Möglichkeit zur Verbesserung der Dauerfestigkeit solcher Verbund-Systeme besteht darin, die Bauteile unter Bildung eins Preßverbandes aneinander zu fixieren. So wurde in der bereits erwähnten US-A 56 10 342 wie auch der WO-A 03/048693 jeweils ein Fixier-Verfahren für Meßrohre in Endstücken vorgeschlagen, bei dem jedes Ende des Meßrohrs in eine entsprechende Bohrung eines einlaßseitigen bzw. eines auslaßseitigen Endstücks eingesteckt und mittels eines in das Ende eingebrachten Walz-Werkzeugs mit der Innenwand der Bohrung, insb. ohne Wärmezufuhr, verpreßt werden, wodurch eine hochfeste Reibschlußverbindung zwischen dem ersten und dem zweiten Bauteil gebildet wird. Ein für dieses Verfahren entsprechend geeignetes Walz-Werkzeug ist beispielsweise auch in der US-A 40 90 382 im Rahmen eines Verfahrens zum Fertigen von Boilern oder Wärmetauschern beschrieben. Eine weitere Möglichkeit zur Herstellung solcher mittels hochfester Reibschlußverbindungen gebildeten Verbund-Systeme besteht, wie z.B. auch in der US-A 60 47 457 vorgeschlagen, darin, daß das erste Bauteil, nach dem es auf das zweite Bauteil aufgeschoben bzw. aufgesteckt worden ist, mittels eines Preß-Werkzeuges von außen zusammendrückt und dabei unterhalb einer Rekristallisationstemperatur der Bauteil-Materials, insb. bei Raumtemperatur, gemischt plastisch-elastisch verformt wird. Die dafür aufgewendeten Verformungskräfte sind dabei jeweils so ausgebildet, daß das zweite Bauteil im wesentlichen keine Querschnittsverjüngungen und/oder - verengungen erfährt, so daß ein initialer Innen-Durchmesser des zweiten Bauteils auch nach dem Herstellen des Verbund-Systems praktisch durchgängig unverändert erhalten bleibt. Eine für das Verpressen entsprechend geeignete Vorrichtung ist beispielsweise in der US-A 37 45 633 gezeigt. Alternativ zum plastisch-elastischen Verpressen kann ein solches mittels Reibschluß gebildetes Verbund-System beispielsweise auch dadurch hergestellt werden, daß das erste Bauteil, wie auch in der US-B 65 98 281 oder der US-B 65 19 828 gezeigt, auf das zweite Bauteil thermisch aufgeschrumpft oder unter Zwischenlage elastisch verformbarer Klemmelemente mit dem zweiten Bauteil verspannt wird.

Weiterführend ist in der US-B 65 98 281 oder der US-B 65 19 828 diskutiert worden, daß allerdings auch bei rein reibschlüssigen Preßverbindungen aufgrund von Schwingungsreibung ein allfälliges Entfestigen des Verbund-Systems nicht immer sicher vermieden werden kann. Überdies können solchen Schwingungsreibungen die Materialien des Verbund-Systems im Bereich der einander kontaktierenden Oberflächen korrodieren lassen. Des weiteren können, wie der WO-A 03/048693 entnehmbar, die üblicherweise unterschiedlichen Ausdehnungsverhalten der Bauteile der vorgenannten Verbund-Systeme, beispielsweise also die oben erwähnten Endstücke und der darin jeweils eingespannten Rohrsegmente des Meßrohrs, dazu führen, daß die durch das erste Bauteil auf das zweite Bauteil ausgeübten Einspannkräfte bei Temperaturschwankungen, insb. bei allfälligen Temperaturschocks wie sie z.B. bei turnusmäßig durchgeführten Reinigungsmaßnahmen mit extrem heißen Spül-Flüssigkeiten auftreten können, unter einen kritischen Wert sinken können. Dies wiederum kann bedeuten, daß das erste Bauteil und das zweite Bauteil aufgrund von thermisch bedingten Ausdehnungen stellenweise den durch das Walzen, Pressen oder Aufschrumpfen herbeigeführten mechanischen Kontakt verlieren und somit das Verbund-System in unzulässigem Maße entfestigt werden können. Infolgedessen können wiederum die Auszugsfestigkeit des Verbund-Systems sinken und insoweit auch mit derartigen Preßverbänden die geforderte hohe Nullpunktstabilität des Meßaufnehmers nicht ohne weiteres sichergestellt werden. Zur Behebung der durch Schwingungsreibung zwischen den Bauteilen verursachten Mängel in Verbund-System der beschriebenen Art wird in der US-B 65 98 281 bzw. der US-B 65 19 828 vorgeschlagen, die zugehörigen Bauteile nach dem Herstellen des Preßverbandes, insb. unter Verwendung eines als Zwischenlage dienenden Füllmaterials, zusätzlich miteinander stoffschlüssig zu verbinden, was allerdings ggf. die oben erwähnten, mit Lötverbindungen einhergehenden Probleme erneut aufwerfen kann. Demgegenüber wird in der WO-A 03/048693 ein Verbund-System vorgeschlagen, das eine erhöhte Verdreh-Festigkeit dadurch erfährt, daß eine in Richtung der Längsachse des Verbund-System verlaufende Nut in die Innenwand des ersten Bauteils eingeformt ist, die unter Bildung eines in einer Umfangrichtung wirkenden Formschluß ein Verdrehen des ersten Bauteils gegenüber dem zweiten Bauteil wirksam verhindern kann. Allerdings kann auch das hier vorgeschlagene Verbund-System eine Verringerung seiner nominellen Auszugsfestigkeit erfahren, sei es durch Schwingungsreibung und/oder durch thermisch bedingtes Dehnen.

Ausgehend von den vorbeschriebenen Nachteilen hinsichtlich der Dauerfestigkeit von solchen in Meßaufnehmern vom Vibrationstyp herkömmlicherweise verwendeten Verbund-Systemen, besteht eine Aufgabe der Erfindung darin, Meßaufnehmer vom Vibrationstyp dahingehend zu verbessern, daß auch Bauteile mit unterschiedlichen chemischen und/oder physikalischen Eigenschaften dauerhaft und schwingungsfest miteinander verbindbar sind und somit Meßaufnehmer vom Vibrationstyp, auch unter Verwendung von aus verschiedenen Metallen bestehenden Bauteile, mit hoher Dauerfestigkeit herstellbar sind. Ferner ist eine Aufgabe der Erfindung darin zu sehen, Verbund-Systeme der beschriebenen Art dahingehend zu verbessern, daß deren Bauteile miteinander dauerhaft und sicher stoffschlüssig, insb. mittels Schweißverbindung, verbindbar sind, dies im besonderen auch für den Fall, daß das Verbund-System bi- oder multi- metallisch ausgebildet ist.

Zur Lösung der Aufgaben besteht die Erfindung in einem Meßaufnehmer vom Vibrationstyp, insb. Coriolis-Massendurchfluß-Meßaufnehmer, für ein dem Messen eines in einer Leitung strömenden Mediums dienendes Meßgerät, welcher Meßaufnehmer wenigstens ein mittels wenigstens eines, insb. aus Metall bestehenden, ersten Bauteils und mittels wenigstens eines, insb. aus Metall bestehenden, zweiten Bauteils gebildetes, insb. bi- oder polymetallisches, Verbund-System umfaßt. Beim erfindungsgemäßen Meßaufnehmer ist ferner wenigstens das erste Bauteil des Verbund-Systems als ein Composite-Formteil ausgebildet, das aus wenigstens zwei Materialien, insb. wenigstens zwei Metallen, besteht, die sich hinsichtlich wenigstens einer physikalischen und/oder chemischen Eigenschaft, insb. einer Materialdichte, einer Schmelztemperatur, eines Wärmeausdehnungskoeffizienten und/oder hinsichtlich des Elastizitätsmoduls etc., voneinander unterscheiden, wobei wenigstens das erste Bauteil des Verbund-Systems zumindest teilweise aus gesintertem Material hergestellt ist. Nach einer ersten Ausgestaltung des Meßaufnehmers der Erfindung bildet jedes der wenigstens zwei voneinander verschiedenen Materialien des ersten Bauteils jeweils wenigstens 1 %, insb. jeweils mehr als 10%, von dessen Volumen.

Nach einer zweiten Ausgestaltung des Meßaufnehmers der Erfindung ist das erste Bauteil schichtweise aus den wenigstens zwei voneinander verschiedenen Materialien aufgebaut ist, und weist jedes der zwei Materialien eine Schichtdicke von wenigstens 1 mm auf.

Nach einer dritten Ausgestaltung des Meßaufnehmers der Erfindung ist ein Porositätsgrad des Composite-Bauteils kleiner als 10%, insb. wesentlich kleiner als 5%, gewählt.

Nach einer vierten Ausgestaltung des Meßaufnehmers der Erfindung ist wenigstens eines der wenigstens zwei Materialien des ersten Bauteils hinsichtlich wenigstens einer physikalischen und/oder chemischen Eigenschaft im wesentlichen gleich mit einem Material des zweiten Bauteils.

Nach einer fünften Ausgestaltung des Meßaufnehmers der Erfindung sind die wenigstens zwei Materialien des ersten Bauteils über eine im Inneren des ersten Bauteils zumindest abschnittsweise gebildeten Diffusionszone zumindest teilweise stoffschlüssig miteinander verbunden.

Nach einer sechsten Ausgestaltung des Meßaufnehmers der Erfindung] ist wenigstens eines der Bauteile des Verbundsystems hülsenförmig ausgebildet.

Nach einer siebenten Ausgestaltung des Meßaufnehmers der Erfindung ist wenigstens das erste Bauteil zumindest teilweise mittels Heißpressens, insb. durchgeführt bei einem hohen Arbeitsdruck von über 800 bar und/oder einer hohen Arbeitstemperatur von über 700°C, hergestellt.

Nach einer achten Ausgestaltung des Meßaufnehmers der Erfindung ist das erste Bauteil mittels isostatischen Heißpressens hergestellt.

Nach einer neunten Ausgestaltung des Meßaufnehmers der Erfindung besteht wenigstens das erste Bauteil teilweise aus einem gegossenen und/oder gewalzten und/oder einem gezogenen Material.

Nach einer zehnten Ausgestaltung des Meßaufnehmers der Erfindung besteht wenigstens eines der Bauteile zumindest teilweise aus wenigstens einem Metall besteht.

Nach einer elften Ausgestaltung des Meßaufnehmers der Erfindung bestehen sowohl das erste Bauteil als auch das das zweite Bauteil jeweils zumindest teilweise aus Metall.

Nach einer zwölften Ausgestaltung des Meßaufnehmers der Erfindung besteht wenigstens eines der Bauteile zumindest teilweise aus Stahl, insb. Edelstahl,.

Nach einer dreizehnten Ausgestaltung des Meßaufnehmers der Erfindung besteht wenigstens eines der Bauteile zumindest teilweise aus Titan, insb. einer Titan-Legierung.

Nach einer vierzehnten Ausgestaltung des Meßaufnehmers der Erfindung besteht wenigstens eines der Bauteile zumindest teilweise aus Tantal, insb. einer Tantal-Legierung.

Nach einer fünfzehnten Ausgestaltung des Meßaufnehmers der Erfindung besteht wenigstens eines der Bauteile zumindest teilweise aus Zirkonium, insb. einer Zirkonium-Legierung.

Nach einer sechzehnten Ausgestaltung des Meßaufnehmers der Erfindung handelt es sich bei jedem der wenigstens zwei Materialien des ersten Bauteils um ein Metall.

Nach einer siebzehnten Ausgestaltung des Meßaufnehmers der Erfindung besteht das erste Bauteil zumindest teilweise aus Stahl und zumindest teilweise aus Titan und/oder Zirkonium und/oder Tantal.

Nach einer achtzehnten Ausgestaltung des Meßaufnehmers der Erfindung sind die wenigstens zwei Bauteile des Verbundsystems zumindest abschnittsweise, insb. mittels Löt- und/oder Schweißverbindung, miteinander stoffschlüssig verbunden. Nach einer Weiterbildung dieser Ausgestaltung der Erfindung sind die wenigstens zwei Bauteile des Verbundsystems zumindest abschnittsweise mittels Löt- und/oder Schweißverbindung miteinander verbunden. Nach einer anderen Weiterbildung dieser Ausgestaltung der Erfindung sind die wenigstens zwei Bauteile des Verbundsystems zumindest abschnittsweise über eine Diffusionszone miteinander verbunden.

Nach einer neunzehnten Ausgestaltung des Meßaufnehmers der Erfindung ist das erste Bauteil unter Bildung der Diffusionszone direkt auf das zweite Bauteil aufgesintert.

Nach einer zwanzigsten Ausgestaltung des Meßaufnehmers der Erfindung sind die wenigstens zwei Bauteile des Verbundsystems zumindest abschnittsweise, insb. mittels eines Kunststoffes, miteinander adhäsiv verbunden.

Nach einer einundzwanzigsten Ausgestaltung des Meßaufnehmers der Erfindung erstreckt sich eines der wenigstens zwei Bauteile des Verbundsystems zumindest teilweise durch das andere Bauteil entlang einer gedachten Längsachse des Verbund-Systems.

Nach einer zweiundzwanzigsten Ausgestaltung des Meßaufnehmers der Erfindung umgreift eines der wenigstens zwei Bauteile des Verbund-Systems das andere der wenigstens zwei Bauteile zumindest abschnittsweise zumindest teilweise.

Nach einer dreiundzwanzigsten Ausgestaltung des Meßaufnehmers der Erfindung kontaktiert eines der wenigstens zwei Bauteile des Verbund-Systems mit einer zumindest teilweise gewölbten, insb. als Zylinderoberfläche ausgebildeten, äußeren Oberfläche eine innere Oberfläche des anderen der wenigstens zwei Bauteile des Verbund-Systems Bauteils zumindest abschnittsweise flächig. Nach einer Weiterbildung dieser Ausgestaltung der Erfindung ist die innere Oberfläche durch eine Innenwand einer sich zumindest in einen Teilbereich des jeweiligen Bauteils erstreckenden Bohrung gebildet. Nach einer anderen Weiterbildung dieser Ausgestaltung der Erfindung bilden die wenigstens zwei Bauteile des Verbundsystems zumindest anteilig einen, insb. in Richtung der Längsachse und/oder in einer Umfangsrichtung der äußeren Oberfläche des zweiten Bauteils wirkenden, Preßverband. Dabei wirken auf durch die einander kontaktierenden Oberflächen der beiden Bauteile des Verbundsystems gebildete Wirkflächen des Verbund-Systems Einspannkräfte, insb. radial zur Längsachse ausgerichtete Normalkräfte, so ein, daß wenigstens eines der beiden Bauteile des Verbundsystems zumindest anteilig dauerhaft elastisch, insb. gemischt elastisch-plastisch, verformt ist.

Nach einer vierundzwanzigsten Ausgestaltung des Meßaufnehmers der Erfindung ist wenigstens eines der Bauteile des Verbund-System zumindest teilweise dauerhaft elastischen, insb. gemischt plastisch-elastischen, Verformungen unterworfen.

Nach einer fünfundzwanzigsten Ausgestaltung des Meßaufnehmers der Erfindung ist wenigstens eines der Bauteile des Verbundsystems ringförmig ausgebildet.

Nach einer zehnten Ausgestaltung des Meßaufnehmers der Erfindung ist wenigstens eines der Bauteile des Verbundsystems rohrförmig ausgebildet. Nach einer Weiterbildung dieser Ausgestaltung der Erfindung ist das wenigstens eine rohrförmig Bauteil als ein zumindest abschnittsweise gerades, kreiszylindrisches Rohr ausgebildet.

Nach einer elften Ausgestaltung des Meßaufnehmers der Erfindung ist eines der Bauteile des Verbund-Systems als ein dem Führen des zu messenden Mediums dienendes, im Betrieb des Meßaufnehmers vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des Meßaufnehmers ausgebildet. Nach einer Weiterbildung dieser Ausgestaltung der Erfindung ist das erste Bauteil als Meßrohr ausgebildet und ist das zweite Bauteil als ein auf dem Meßrohr fixierter, insb. plattenförmiger oder scheibenförmiger, Metallkörper ausgebildet. Nach einer anderen Weiterbildung dieser Ausgestaltung der Erfindung ist das zweite Bauteil als Meßrohr ausgebildet und ist das erste Bauteil als ein auf dem Meßrohr fixierter, insb. plattenförmiger oder scheibenförmiger, Metallkörper ausgebildet.

Nach einer Weiterbildung des Meßaufnehmers der Erfindung umfaßt das Verbund-System weiters ein drittes Bauteil, das am ersten Bauteil und/oder am zweiten Bauteil fixiert ist. Nach einer ersten Ausgestaltung dieser Weiterbildung der Erfindung ist das erste Bauteil sowohl mit dem zweiten Bauteil als auch mit dem dritten Bauteil jeweils zumindest abschnittsweise stoffschlüssig verbunden. Nach einer zweiten Ausgestaltung dieser Weiterbildung der Erfindung besteht das dritte Bauteil aus einem Material, das sich hinsichtlich wenigstens einer physikalischen und/oder chemischen Eigenschaft, insb. einer Schmelztemperatur, eines Wärmeausdehnungskoeffizienten und/oder hinsichtlich des Elastizitätsmoduls etc., von einem Material des zweiten Bauteils unterscheidet. Nach einer dritten Ausgestaltung dieser Weiterbildung der Erfindung ist das dritte Bauteil vom ersten Bauteil beabstandet angeordnet und/oder zum ersten Bauteil im wesentlichen identisch ausgebildet. Nach einer vierten Ausgestaltung dieser Weiterbildung der Erfindung ist das erste oder das zweite Bauteil des Verbund-Systems als ein dem Führen des zu messenden Mediums dienendes, im Betrieb des Meßaufnehmers vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des Meßaufnehmers ausgebildet und ist das dritte Bauteil als ein schwingfähig am des Meßrohr fixiertes und/oder das Meßrohr schwingfähig halterndes Trägerelement des Meßaufnehmers ausgebildet. Nach einer fünften Ausgestaltung dieser Weiterbildung der Erfindung ist das dritte Bauteil als ein das Meßrohr umhüllendes Aufnehmer-Gehäuse des Meßaufnehmers ausgebildet. Nach einer sechsten Ausgestaltung dieser Weiterbildung der Erfindung ist das dritte Bauteil als ein das Meßrohr umhüllender, insb. zylindrischer und im wesentlichen koaxial zum Meßrohr ausgerichteter, Gegenschwinger des Meßaufnehmers ausgebildet. Nach einer siebenten Ausgestaltung dieser Weiterbildung der Erfindung ist wenigstens eines der drei Bauteile des Verbund-Systems als ein an einem Ende des Meßrohrs fixierter, dem Anschließen einer als Rohrleitung ausgebildeten Leitung an das Meßrohr dienender Flansch des Meßaufnehmers ausgebildet.

Ein Grundgedanke der Erfindung besteht darin, eines der Bauteile von Verbund-Systemen der beschriebenen Art als gesintertes Composite-Formteil auszubilden. Dadurch wird es ermöglicht, dessen mit andern Bauteilen in Kontakt kommende Oberflächen jeweils in ihren physikalischen und/oder chemischen Eigenschaften auf einfache Weise möglichst gut an die physikalischen und/oder chemischen Eigenschaften des jeweils kontaktieren anderen Bauteils anzupassen, so daß die Bauteile bei der Herstellung des Meßaufnehmers ohne weiteres auch mittels Schweißverbindungen stoffschlüssig miteinander verbindbar sind. Überdies kann die geforderte hohe Qualität der Verbund-System, sei es hinsichtlich der Materialeigenschaften der verwendeten Bauteile oder hinsichtlich der mechanischen Festigkeit, nicht nur erhöht, sondern auch weitaus zuverlässiger reproduziert werden.

Als ein weiterer Vorteil gegenüber herkömmlichen Meßaufnehmern mit solchen Verbund-Systemen, die anteilig oder gänzlich mittels Stoffschluß gebildet sind, kann zudem die erhebliche Vereinfachung der Fertigung und auch die Senkung der Fertigungskosten angesehen werden. Beispielsweise kann das wenigstens eine zumindest teilweise Composite-Bauteil in-situ, also zumindest in der endgültigen Position und Lage, direkt auf dem anderen Bauteil aufgesintert und mit diesem über eine zwischen den Materialien beider Bauteile gebildet Diffusionszone stoffschlüssig verbunden werden.

Ein weiterer Vorteil der Erfindung besteht ferner darin, daß sich das Verbund-System besonders auch für das Verbinden eines massiven und vergleichsweise starren Bauteils, wie z.B. einem als Endstück oder als Koppler dienenden Metallkörper, mit einem im Vergleich dazu leicht deformierbaren, relativ dünnwandigen Bauteil, wie dem Meßrohr, eignet. Infolge auch dessen können die Auszugsfestigkeiten des erfindungsgemäßen Verbund-Systems auch nach mehrfacher Schwingungsbelastung ohne weiteres oberhalb von 50% der anfänglich vorhanden, vergleichsweise hohen Anfangsauszugsfestigkeiten und somit auch für eine hohe Betriebsdauer ohne weiteres oberhalb der für Meßaufnehmer der beschriebenen Art geforderten Mindestfestigkeiten gehalten werden.

Die Erfindung sowie vorteilhafte Ausgestaltungen werden nun anhand von Figuren der Zeichnung näher erläutert, wobei
- Fig. 1: in einer perspektivischen Seitenansicht ein In-Line-Meßgerät zeigt,
- Fig. 2: im Schnitt eine Längsansicht eines für die Verwendung in einem In-Line-Meßgerät gemäß Fig. 1 geeigneten, insb. als Coriolis-Massedurchflussaufnehmer ausgebildeten, Meßaufnehmers vom Vibrationstyp mit wenigstens zwei zu einem Verbund-System vereinigten Bauteilen zeigt,
- Fig. 3: perspektivisch und teilweise im Schnitt eine Längsansicht eines weiteren, aus Verbund-Systemen der beschriebenen Art aufgebauten Meßaufnehmers vom Vibrationstyp zeigt,
- Fig. 4: perspektivisch einen als erstes Bauteil des Verbund-Systems von Fig. 2 dienenden, auf einem nur teilweise dargestellten, kreiszylindrischen Meßrohr eines Meßaufnehmers vom Vibrationstyp fixierten kreisscheibenförmigen Metallkörper, der als zweites Bauteil des Verbund-Systems von Fig. 2 dient, zeigt,
- Fig. 5: im Schnitt eine Längsansicht eines zur Bildung des Verbund-Systems der beschriebenen Art geeigneten, aus wenigstens zwei Materialien bestehenden Composite-Bauteils zeigt,
- Fig. 6: schematisiert Varianten und Alternativen zur Herstellung eines Composite-Bauteils der beschreibenen Art zeigt und
- Fig. 7: schematisiert einzelne Verfahrensschritte zur Herstellung eines gesinterten Composite-Bauteils der beschriebenen Art zeigt.

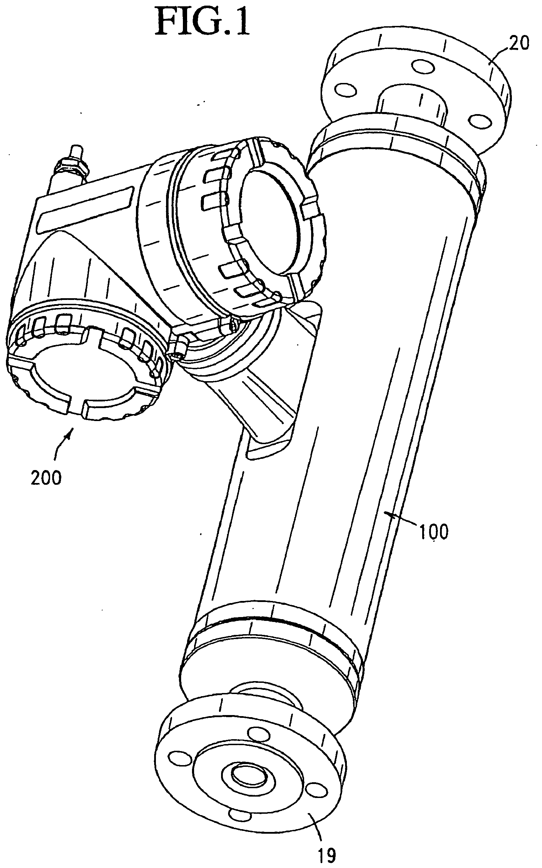

In Fig. 1 ist ein In-Line-Meßgerät, beispielsweise ein Coriolis-Massedurchfluß-Meßgerät, ein Dichte-Meßgerät, ein Viskositäts-Meßgerät oder dergleichen, mit einem Meßaufnehmer vom Vibrationstyp schematisch dargestellt, das dazu dient, wenigstens eine strömungsdynamische und/oder eine rheologische Meßgröße eines in einer Leitung geführten Mediums zu messen. Das In-Line-Meßgerät umfaßt einen in einem Aufnehmer-Gehäuse untergebrachten, dem Erfassen der Meßgröße dienenden Meßaufnehmer 100 sowie eine in einem Elektronik-Gehäuse untergebrachte, u.a. dem Steuern des Meßaufnehmer und dem Verarbeiten von dessen Meßsignalen dienende Meßgerät-Elektronik 200.

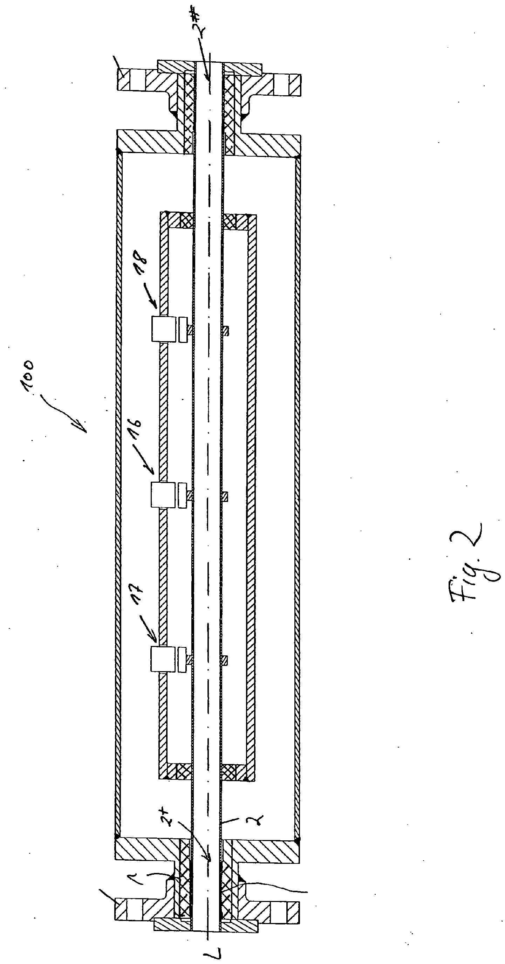

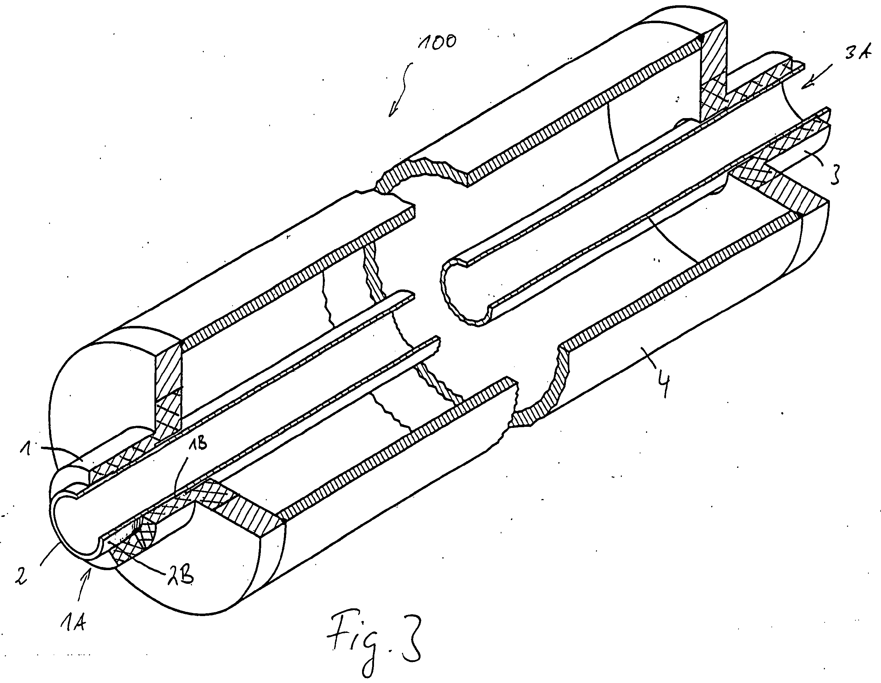

In den Fig. 2 bzw. 3 ist ferner ein Ausführungsbeispiel für einen entsprechenden, beispielsweise als Coriolis-Massendurchfluß- und/oder Dichte- und/oder Viskositäts-Meßaufnehmer dienenden, Meßaufnehmer 100 vom Vibrationstyp gezeigt, der für die Verwendung in einem solchen, dem Messen eines zumindest zeitweise strömenden Mediums dienenden In-Line-Meßgerät vorgesehen ist. Das In-Line-Meßgerät ist im Benutzungsfall mittels des Meßaufnehmers 100 in den Verlauf einer von einem zu messenden Fluid durchströmten - aus Übersichtlichkeitsgründen hier nicht dargestellten - Rohrleitung eingefügt, so daß der Meßaufnehmer 100 im Meßbetrieb zumindest zeitweise vom zu messenden Medium durchströmt ist. Allerdings sind von besagtem Meßaufnehmer hier lediglich die für die Erläuterung der Erfindung wesentlichen konstruktiven Einzelheiten gezeigt; die restlichen und zur vollen Funktion des Meßaufnehmers oder des In-Line-Meßgeräts ebenfalls erforderlichen Komponenten sind aus Übersichtlichkeitsgründen nicht dargestellt. Dies auch deshalb, weil der Aufbau, die Funktionsweise wie auch die Anwendungsgebiete für solche Meßaufnehmer bzw. In-Line-Meßgeräte dem Fachmann an und für sich bekannt sind; insoweit wird hierzu auf die eingangs bereits erwähnten Dokumente des Standes der Technik verwiesen.

Der erfindungsgemäße Meßaufnehmer 100 umfaßt wenigstens ein, insb. bi- oder polymetallisches, Verbund-System, das aus wenigstens einem ersten Bauteil 1 und einem zweiten Bauteil 2 des Meßaufnehmers gebildet ist. Nach einer Ausgestaltung der Erfindung sind die wenigstens zwei Bauteile des Verbund-Systems so ausgebildet und aneinander fixiert, daß sich ein inneres der beiden Bauteile zumindest teilweise durch das andere, äußere Bauteil entlang einer gedachten Längsachse L des Verbund-Systems erstreckt. Das innere Bauteil weist dabei eine zumindest teilweise gewölbte, insb. als Zylinderoberfläche ausgebildete, äußere Oberfläche auf, die eine innere Oberfläche des äußeren Bauteils 1 flächig so kontaktiert, daß das äußere Bauteil das innere Bauteil zumindest abschnittsweise zumindest teilweise umgreift. Beispielsweise kann dabei die innere Oberfläche des äußere ersten Bauteils durch eine Innenwand einer sich zumindest in einen Teilbereich des äußeren Bauteils erstreckenden Bohrung gebildet sein, während die äußere Oberfläche des inneren zweiten Bauteils durch eine Außenwand des zweiten Bauteils gebildet ist.

Im vorliegenden Ausführungsbeispiel ist das Verbund-System durch ein praktisch als inneres Bauteil 2 des Verbund-Systems fungierendes Meßrohr des Meßaufnehmers 100 sowie einer an diesem fixierten weiteren Komponente des Meßaufnehmers 100 gebildet, beispielsweise einen auf das Meßrohr oder eine von dessen endseitigen Verlängerungen aufgeschobenen und daran fixierten Metallkörper der eingangs erwähnten Art. Das Meßrohr ist, wie bereits angedeutet, dafür vorgesehen, in den Verlauf einer von einem zu messenden Medium, z. B. von einer Flüssigkeit oder von einem Gas, durchflossene Rohrleitung eingesetzt und mit dieser fluid-leitend so verbunden zu werden, daß das zu messende Fluid im Betrieb des entsprechenden Meßaufnehmers auch durch das Meßrohr fließen kann. Zu diesem Zweck sind entsprechende Flansche 19, 20 vorgesehen, die über ein jeweiliges kurzes Rohrstück mit dem Meßrohr oder dieses jeweils endseitig verlängernde Endstücke verbunden sind, in das ein Einlaßende 2⁺ und ein Auslaßende 2^{#} des hier gezeigten einzigen Meßrohrs jeweils mündet. Anstatt über die Flansche kann der Meßaufnehmer auch mittels anderer üblicher Befestigungsmittel, beispielsweise mittels sogenannter TriClamp®-Anschlüsse oder auch mittels Verschraubungen, an die Rohrleitung angeschlossen werden. Bei dem gezeigten Ausführungsbeispiel wird also die als erste Wirkfläche 1 B des Verbund-Systems dienende innere Oberfläche des ersten Bauteils 1 durch eine Innenwand der sich hier durchgehend durch das erste Endstück hindurch erstreckende Bohrung 1A gebildet, während die als zweite Wirkfläche 2B des Verbund-Systems dienende äußere Oberfläche 2B des zweiten Bauteils 2 durch eine Außenwand des Meßrohrs gebildet ist.

Wie bei derartigen Meßaufnehmern durchaus üblich, ist gemäß einer Ausgestaltung der Erfindung vorgesehen, daß wenigstens eines der beiden Bauteile 1, 2, insb. das Meßrohr, zumindest teilweise aus wenigstens einem Metall besteht oder daß das erste Bauteil und das zweite Bauteil jeweils zumindest teilweise aus Metall bestehen. Als Material für das wenigstens eine metallische Bauteil kann beispielsweise Stahl, insb. Edelstahl, Titan, Tantal sowie Zirkonium oder auch eine aus wenigstens einem der vorgenannten hoch-korrosionsbeständigen Metalle bestehende Metall-Legierung dienen.

Zum Erzeugen von mit einer physikalischen Meßgröße, z.B. einem Massedurchfluß, einer Dichte und/oder einer Viskosität des Fluids, korrespondierenden und insoweit das Fluid beschreibenden Reaktionskräften, z.B. mit dem Massedurchfluß korrelierte Corioliskräfte oder mit der Viskosität korreliert Reibungskräfte etc., wird das Meßrohr-angetrieben von einem darauf einwirkenden, elektro-mechanischen Schwingungserreger - im Betrieb zumindest zeitweise vibrierengelassen. Gemäß einer Ausgestaltung der Erfindung wird das dem Führen des zu messenden Mediums dienende Meßrohr dabei so angeregt, daß es zumindest zeitweise Biegeschwingungen um eine die beiden Rohrsegment imaginär verbindende, in Richtung der erwähnten Längsachse des Verbund-Systems verlaufende und/oder mit der Längsachse des Verbund-Systems koinzidierende Schwingungsachse ausführt. Als Schwingungserreger 16 können die für diesen Zweck im Stand der Technik von solchen, insb. als Coriolis-Massedurchflußaufnehmer verwendeten, Meßaufnehmem vom Vibrationstyp beschriebenen verschiedenen Arten von Schwingungserregern dienen. Mittels des Schwingungserregers 16 wird das Meßrohr 13 im Betrieb vorzugsweise zu solchen Biegeschwingungen angeregt, deren Schwingungsfrequenz im wesentlichen gleich einer momentanen mechanischen Eigenfrequenz des Meßrohrs mit darin geführtem Fluid ist. Zum Erfassen von Vibrationen des Meßrohrs und zum Erzeugen von mit diesen korrespondierenden Vibrationssignalen können in der dem Fachmann bekannten Weise entsprechende Schwingungssensoren in der Nähe des Meßrohrs angebracht sein. In der Fig. 1 ist beispielsweise ein erster und ein zweiter Sensor 17, 18 für die einlaß- bzw. die auslaßseitigen Bewegungen des Meßrohrs vorgesehen, von denen jeder jeweils zwischen dessen Mitte und dem einlaß- bzw. dem auslaßseitigen Endstück, und zwar etwa in gleichem Abstand, angeordnet ist. Im in Fig. 1 gezeigten Ausführungsbeispiel befindet sich auf dem Meßrohr am Ort des jeweiligen Sensors ferner ein etwa kreisring- oder kreischeibenförmiger Metallkörper, der mit dem Sensor 17, 18 zusammenwirkt und der nochmals in Fig. 8 in einer perspektivischen Seitenansicht vergrößert dargestellt ist. Als Sensoren 17, 18 können die für diesen Zweck im Stand der Technik von solchen, insb. als Coriolis-Massedurchflußaufnehmer verwendeten, Meßaufnehmern vom Vibrationstyp beschriebenen verschiedenen Arten von Sensoren dienen, wie z.B. elektrodynamisch oder optisch arbeitende Weg-, Geschwindigkeits- oder Beschleunigungssensoren.

Wie aus der Fig. 2 bzw. 3 ferner ersichtlich, ist ein, insb. zum ersten Rohrsegment im wesentlichen identisch geformtes, zweites Rohrsegment des Meßrohrs in eine Bohrung 3A eines, insb. zum ersten Endstück im wesentlichen identisch geformten, zweiten Endstücks des Meßaufnehmers 100 gesteckt. Nach einer Ausgestaltung der Erfindung sind das zweite Rohrsegment und das zweite Endstück in der gleichen Weise miteinander verbunden, wie das erste Rohrsegment mit dem ersten Endstück 11. Das erste Endstück und das hier praktisch ebenfalls als ein Bauteil des Verbund-Systems fungierende zweite Endstück sind weiters mittels wenigstens einer seitlich angeordneten, beispielsweise anmontierten oder angeschweißten, Trägerplatte oder einem im wesentlichen zylindrischen Trägerrohr 4 zu einem das wenigstens eine Meßrohr schwingfähig einspannenden Trägerelement vervollständigt. Letzteres ist insoweit auch als ein weiteres Bauteil des Verbund-Systems anzusehen. Anstelle des zylindrischen Trägerrohrs kann aber beispielsweise auch ein eher kastenförmiges Bauteil für das Trägerelement verwendet werden. Beispiele für den Aufbau und die Wirkungsweise solcher Trägerelemente sind u.a. den eingangs bereits erwähnten US-A 48 23 614, US-A 52 53 533, US-A 57 05 754, US-A 57 96 011, US-A 60 06 609, US-A 60 47 457, US-A 61 68 069 US-B 63 14 820, US-B 63 97 685, US-B 64 87 917, US-B 65 16 674, US-B 66 91 583, US-B 66 66 098, US-B 66 98 644, US-B 67 11 958, US-B- 68 51 323 oder WO-A 03/048693 entnehmbar.

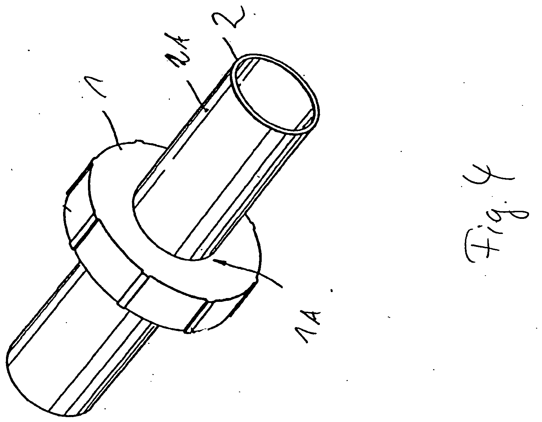

Es sei an dieser Stelle ferner erwähnt, daß anstelle der im Ausführungsbeispiel als Endstück und insoweit eher hülsen- oder rohrförmig ausgebildeten äußere Bauteil 1 auch ein ringförmig, platten- oder auch scheibenförmig ausgebildeter Metallkörper als äußeres Bauteil 1 des Verbund-Systems dienen kann, vgl. hierzu auch Fig. 4. Neben den in den Fig. 2, 3 oder 4 gezeigten Ausführungsbeispielen für das Bauteil 1 mit im wesentlichen kreisförmigen Außenkonturen können ferner auch solche Bauteile verwendet werden, die eine nicht-kreisförmige Außenkontur, beispielsweise nach der Art einer Sechskant-Mutter, einer Quadrat-Scheibe oder auch nach der in der US-A 60 47 457 gezeigten Art mit einem seitlichen Fortsatz etc., aufweisen. Demgemäß handelt es sich nach einer weiteren Ausgestaltung der Erfindung bei dem Bauteil 1 um einen Metallkörper, der eine einer Außen-Umfangsfläche 2A des als Meßrohr ausgebildeten inneren Bauteils 2 angepaßte Bohrung und eine entsprechende Innen-Umfangsfläche aufweist, und der auf der Außen-Umfangsfläche 2A des Meßrohrs unter Bildung des Verbund-Systems entsprechend fixiert worden ist. Das in der Fig. 4 als ring- bzw. scheibenförmiger Metallkörper ausgebildete Bauteil 1 kann, wie bereits angedeutet, als Halterung für einen der bereits erwähnten Schwingungssensoren oder den Schwingungserreger oder aber auch, wie in der WO-A 03/027616 vorgeschlagen, als den Querschnitt des Meßrohrs auch bei Druckschwankungen stabilisierendes Versteifungselement dienen.

Erfindungsgemäß ist ferner vorgesehen, daß wenigstens eines von den wenigstens zwei Bauteilen des Verbund-Systems - beispielsweise das Meßrohr und/oder der erwähnte Metallkörper - als ein aus chemisch und/oder physikalisch verschiedenen Materialien gebildetes Composite-Formteil ausgebildet ist. Dementsprechend besteht, wie auch in Fig. 2, 3 oder 5 schematisiert dargestellt, zumindest eines der Bauteile des Verbund-Systems, beispielsweise das äußere Bauteil 1, aus wenigstens zwei Materialien, die sich hinsichtlich wenigstens einer werkstofflichen, insb. physikalischen und/oder chemischen, Eigenschaft voneinander unterscheiden. Bei der wenigstens einen die beiden Materialien unterscheidende werkstofflichen Eigenschaft kann sich z.B. um eine innere Materialstruktur, eine Materialdichte, eine Schmelztemperatur, einen Wärmeausdehnungskoeffizienten, eine Bruchfestigkeit und/oder einen Elastizitätsmodul jedes der beiden Materialien handeln. Anders gesagt, ist das Composite-Bauteil 1 insoweit als ein Mehrkomponenten-System ausgebildet, als das es aus wenigstens zwei chemisch unterschiedlichen Materialien besteht, und/oder ist das Composite-Bauteil 1 als insoweit als inhomogenes Mehrphasen-System ausgebildet, als das es aus wenigstens zwei hinsichtlich seiner inneren Struktur, insb. des Materialgefüges, unterschiedlichen Materialien besteht. Nach einer Ausgestaltung der Erfindung handelt es sich bei wenigstens einem der beiden Materialien des Composite-Bauteils 1 um ein Metall, beispielsweise Stahl, Titan, Zirkonium, oder ggf. ein noch edleres Metall, wie Tantal, Gold oder Platin. Nach einer Weiterbildung dieser Ausgestaltung der Erfindung handelt es sich bei jedem der wenigstens zwei voneinander verschiedenen Materialien des Composite-Bauteils um ein Metall. Beispielsweise kann es sich bei den für das Composite-Bauteil 1 verwendeten Materialien jeweils auch um voneinander verschiedene Stahlsorten handeln.

Bei dem in Fig. 2 und 3 beispielhaft gezeigten Meßaufnehmer 100 kann das als Composite-Bauteil ausgebildet äußere Bauteil 1 des Verbund-Systems beispielsweise ein erstes Endstück eines das Meßrohr einhausenden Aufnehmer-Gehäuses mit einer darin eingebrachten Bohrung 1A sein, das ein einlaßseitiges gerades, im wesentlichen kreiszylindrisches erstes Rohrsegment des - hier nur teilweise gezeigten - Meßrohrs des Meßaufnehmers aufnimmt. Gleichermaßen kann auch der vorgenannte Metallkörper als Composite-Bauteil ausgebildet sein. Alternativ oder in Ergänzung dazu kann auch das Meßrohr selbst - also auch das zweite Bauteil 2 - ein Composite-Bauteil sein.

Durch die Kombination von den wenigstens zwei unterschiedlichen Materialien (Metallen) in dem wenigstens einen Composite-Bauteil wird es ermöglicht, letzteres in seinen Eigenschaften gut an die chemischen und/oder physikalischen Eigenschaften des jeweils daran fixierten anderen Bauteils des Verbund-Systems sowie auch in entsprechender Weise an chemische und/oder physikalische Eigenschaften allfällig im Verbund-System vorgesehener weitere Bauteile anzupassen. Bei einer geeigneten Kombination der wenigstens zwei Materialien des Bauteils 1 - hier den wenigstens zwei Metallen - einhergehend mit einer dazu passenden Wahl des Materials oder der Materialien für das zweite Bauteil 2 kann ohne weiteres auch eine stoffschlüssige Verbindung, insb. auch eine Löt- und/oder Schweißverbindung, zwischen den beiden Bauteilen 1, 2 hergestellt werden, vgl. hierzu auch Fig. 2, 3 oder 5. Beispielsweise kann so ein anteilig aus Stahl bestehendes Bauteil ohne weiteres auch mit einem anteilig aus Titan und/oder Zirkonium und/oder Tantal bestehenden Bauteil löt- oder schweißtechnisch verbunden werden, sofern die einander kontaktierenden Wirkflächen der beiden Bauteile jeweils aus einem Material bestehen, das zum kontaktierenden Material des jeweils anderen Bauteils schweiß- oder löttechnisch kompatibel ist. Infolgedessen kann bei geeigneter Auswahl der im einzelnen für die Bauteile verwendeten Materialien für das für das erfindungsgemäße Verbund-System auf sehr einfache Weise dauerhaft eine sehr hohe mechanische Festigkeit, insb. auch unter Einwirkung von betriebsbedingt mittel- oder hochfrequent wechselnden Kräften, erzielt werden, wodurch das erfindungsgemäße Verbund-System sehr gut für die Anwendung auf Meßaufnehmern vom Vibrationstyp geeignet ist. Darüber hinaus kann so auch ein aus Titan gefertigtes Meßrohr unter Zwischenlage des Composit-Bauteils 1 ohne weiteres auch mit einem aus Stahl oder Edelstahl gefertigten Trägerrohr oder -kasten auch durchgängig stoffschlüssig verbunden werden (s. unten). Nach einer Ausgestaltung der Erfindung ist daher wenigstens eines der wenigstens zwei Materialien des Composite-Bauteils 1 so gewählt, daß dieses Material hinsichtlich wenigstens einer physikalischen und/oder chemischen Eigenschaft im wesentlichen gleich ist mit einem Material des daran fixierten Bauteils 2 des Verbund-Systems. In vorteilhafter Weise dabei wenigstens eines der Materialien des Composite-Bauteils so gewählt, daß es im wesentlichen gleich ist mit einem Material des anderen, am Composite-Bauteil fixierten Bauteils des Verbund-Systems.

Um ein möglichst stabile und dauerhafte Verbindung zwischen den Materialien des Composite-Bauteils, insb. auch bei erhöhter mechanischer Beanspruchung, zu erzielen und somit auch eine hohe Dauerfestigkeit des Composite-Bauteils gewährleisten zu können ist gemäß einer Ausgestaltung vorgesehen, daß das Composite-Bauteil 1, wie auch in Fig. 2, 3 oder 5 schematisiert dargestellt, schichtweise aus den wenigstens zwei voneinander verschiedenen Materialien aufgebaut ist. In vorteilhafter Weise weisen dabei jede der wenigstens zwei Materialien eine Schichtdicke von wenigstens 1 mm auf. Gemäß einer weiteren Ausgestaltung der Erfindung ist ferner vorgesehen, daß jedes der wenigstens zwei voneinander verschiedenen Materialien des Composite-Bauteils 1 jeweils wenigstens 1%, insb. jeweils mehr als 10%, von dem Volumen des Composite-Bauteils bilden.

Nach einer anderen Ausgestaltung der Erfindung handelt es sich bei jedem der wenigstens zwei Materialien des ersten Bauteils 1 um ein Metall. Nach einer Weiterbildung dieser Ausgestaltung der Erfindung besteht das Bauteil 1 dabei zumindest teilweise aus Stahl und zumindest teilweise aus Titan und/oder Zirkonium und/oder Tantal und/oder einem anderen, insb. im Vergleich zu Stahl edleren, Metall.

Gemäß einer Weiterbildung der Erfindung sind die wenigstens zwei Bauteile 1, 2 des Verbund-Systems zumindest abschnittsweise, insb. mittels Löt- und/oder Schweißverbindung, miteinander stoffschlüssig verbunden. Zum Herstellen des Verbund-Systems kann das erste Bauteil 1 - beispielsweise also vorgenanntes Endstück - mit dem zweiten Bauteil 2 - beispielsweise also dem Meßrohr - in der Weise zusammengeführt werden, daß sich das zweite Bauteil 2 zumindest teilweise durch die im ersten Bauteil 1 gebildete Bohrung 1A in Richtung der Längsachse L des Verbund-Systems erstreckt. Daran anschließend können beide Bauteile miteinander verschweißt und/oder verlötet werden. Nach einer anderen Weiterbildung der Erfindung sind die beiden Bauteile 1, 2 des Verbund-Systems zumindest teilweise über eine entlang eines Kontaktbereichs zwischen den beiden Bauteilen, beispielsweise durch Diffusionsschweißen und/oder einen Sinterprozeß, gebildete Diffusionszone miteinander stoffschlüssig verbunden; falls erforderlich können zusätzlich angebrachte Löt- oder Schweißverbindungen die Festigkeit des Verbund-Systems noch weiter verbessern.

Alternativ oder in Ergänzung zum stoffschlüssigen Verbinden wenigstens der zwei Bauteile des Verbund-Systems sind die beiden Bauteile sowie deren einander kontaktierenden Oberflächen gemäß einer Weiterbildung der Erfindung ferner so ausgebildet und so geformt, daß die beiden Bauteile 1, 2, wie beispielsweise auch in der US-B 65 98 281, der US-B 65 19 828, der US-A 60 47 457, der US-A 56 10 342, der WO-A 03/048693 oder den eingangs erwähnten deutschen Anmeldungen DE 102004048765.0 oder DE10354373.2 vorgeschlagen, anteilig auch unter Bildung eines Reibschlusses und/oder eines Formschlusses miteinander mechanisch fest verbunden sind. Ferner sind die Oberflächen der Bauteile 1, 2 so geformt, daß der darüber hergestellte Reibschluß auch in einer Umfangsrichtung der äußeren Oberfläche des zweiten Bauteils 2 wirkt. Dies wird bei dieser Ausgestaltung des erfindungsgemäßen Verbund-System dadurch erreicht, daß auf dessen durch die einander kontaktierenden Oberflächen der beiden Bauteile 1, 2 gebildete Wirkflächen 1 B, 2B Einspannkräfte, insb. radial zur Längsachse 2 ausgerichtete Normalkräfte F, so einwirken, daß wenigstens eines der beiden Bauteile des Verbund-System zumindest anteilig dauerhaft elastisch verformt ist. Diese Normalkräfte werden nach einer Ausgestaltung der Erfindung zumindest anteilig dadurch erzeugt, daß wenigstens eines der beiden Bauteile 1, 2 gemischt elastisch-plastisch verformt ist, also sowohl plastisch verformte Bereiche, die durch Dehnung oder Stauchung des betreffend Bauteils darin eingetragen worden sind, als auch daraus resultierend dauerhaft elastisch verformte Bereiche aufweist. Die beiden Bauteile 1, 2 des Verbund-Systems bilden somit zumindest anteilig einen, insb, in Richtung der Längsachse L und/oder in einer Umfangsrichtung der äußeren Oberfläche des zweiten Bauteils 2 wirkenden, Preßverband.

Erfindungsgemäß ist zumindest eines der wenigstens zwei Materialien des Bauteil 1 gesintert, d.h. das Bauteil 1 besteht zumindest anteilig aus gesintertem Material. Insoweit handelt sich in dieser Ausgestaltung der Erfindung bei dem Composite-Bauteil 1 also um ein Sinterformteil oder ein zumindest teilweise gesintertes Bauteil. Aufgrund von dadurch im Inneren des Bauteils 1 zwischen den einzelnen Kristallen und/oder Partikeln der beiden Materialien gebildeten Diffusionszonen DZ wird trotz der chemisch/physikalischen Unterschiedlichkeiten der beiden

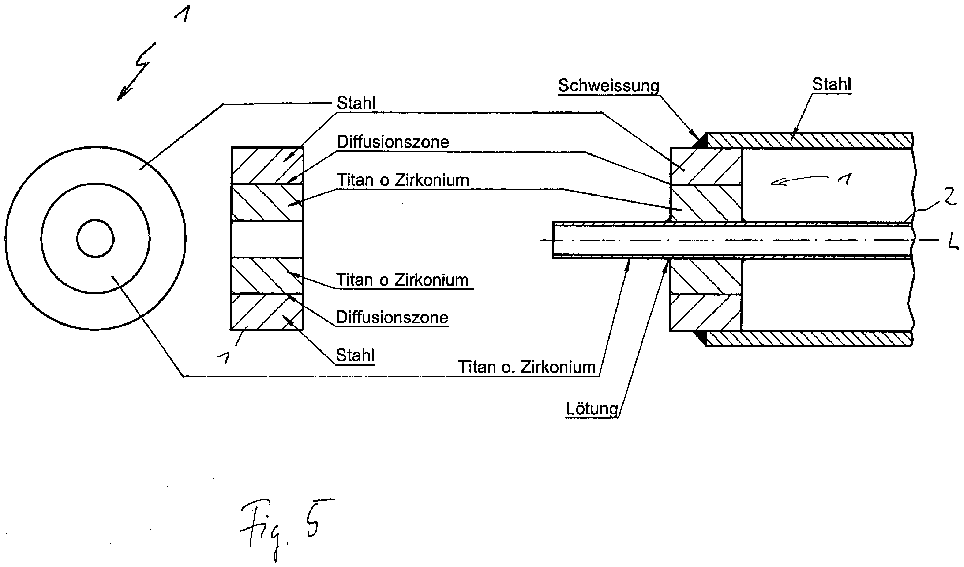

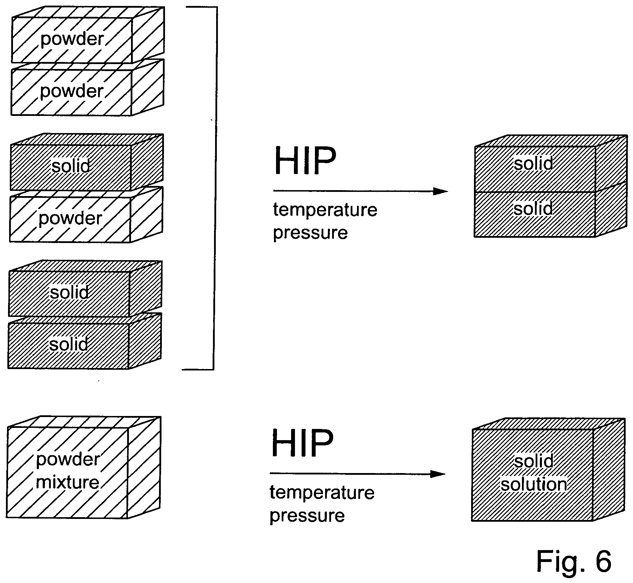

Materialien dauerhaft ein hochfester, zumindest teilweise stoffschlüssiger Verbund zwischen diesen gebildet vgl. Fig. 5 und 6.

Infolgedessen kann einerseits eine optimale Anpassung der chemisch/physikalischen Eigenschaften des ersten Bauteils an die des damit verbundenen zweiten Bauteils 2 erfolgen. Anderseits kann so auch eine sehr hohe mechanische Stabilität des so hergestellten Bauteils 1 und insofern auch des Verbund-Systems selbst erzielt werden. Zum Herstellen des wenigstens einen zumindest teilweise gesinterten Bauteils 1 wird in geeigneter Weise schüttfähiges, also körniges und/oder pulverförmiges, Sinterausgangsmaterial in eine entsprechende Sinterform gegeben und anschließend unter Zufuhr von Wärme, ggf. auch unter Vakuum, entsprechend gesintert, vgl. hierzu auch Fig 6. Wie in Fig. 6 schematisiert dargestellt können dabei als Ausgangsmaterialien für die Herstellung des Bauteils 1 verschiedene sinterfähigen Pulver und/oder Granulate dienen, die aufeinander geschichtete und/oder miteinander vermischt und/oder auf Feststoff-Oberflächen appliziert werden.

Das Sintern kann dabei beispielsweise in einem entsprechenden Sinterofen oder in einem Autoklaven erfolgen. Nach einer weiteren Ausgestaltung der Erfindung wird die Sinterform dabei zumindest teilweise durch wenigstens ein, beispielsweise rohrförmiges, Halbzeug gebildet, das nach dem Sintern, beispielsweise infolge von Diffusion zwischen den einzelnen Materialien und/oder Phasen, integraler Bestandteil des ersten Bauteils 1 ist. Dementsprechend kann dieses Halbzeug zumindest teilweise auch aus zumindest einem der für das Bauteil vorgesehenen Materialien bestehen. Bei dem dafür verwendeten Halbzeug kann sich z.B. um ein gezogenes, gewalztes oder gegossenes Halbzeug handeln, so daß also zumindest für diesen Fall das Bauteil 1 zumindest teilweise auch aus einem gegossenen und/oder gewalzten und/oder einem gezogenen Material bestehen kann. Gleichwohl kann das als Sinterform dienende Halbzeug aber auch selbst gesintert sein.

Nach einer anderen Ausgestaltung der Erfindung wird die Sinterform zumindest teilweise durch das zumindest teilweise vorgefertigte zweite Bauteil 2 gebildet. Nach einer Weiterbildung dieser Ausgestaltung der Erfindung wird das erste Bauteil 1, praktisch direkt auf das andere Bauteil aufgesintert wird. Somit können zum einen beide Bauteile 1, 2 des Verbundsystems, insb. in deren Kontaktbereichen, auf sehr einfache Weise zueinander angepaßt werden. Zum anderen kann durch geeignete Auswahl der für die einzelnen Bauteile 1, 2 bzw. deren Herstellung verwendeten Materialien sowie durch entsprechende Kalibrierung des Sinterprozesses, daß infolge von Diffusionserscheinungen auch im Kontaktbereich zwischen dem formgebenden zweiten Bauteil 2 und dem Sintermaterial für das erste Bauteil 1 bereits bei mit dessen Herstellung eine feste Verbindung zwischen den beiden Bauteilen 1, 2 und insoweit das Verbund-Systems zumindest anteilig bereits durch das Sintern gebildet werden. Beispielsweise kann das wenigstens eine zumindest teilweise gesinterte Composite-Bauteil so in vorteilhafter Weise in-situ, also zumindest in der endgültigen Position und Lage, ggf. auch in der endgültigen Form, direkt auf dem anderen Bauteil aufgesintert und mit diesem über ein zwischen den einander kontaktierenden Materialien beider Bauteile gebildet Diffusionszone stoffschlüssig verbunden werden. Dementsprechend kann sowohl eines der Bauteile für sich genommen als auch das gesamte Verbund-System als Sinterformteil ausgebildet sein.

Nach einer weiteren Ausgestaltung der Erfindung ist wenigstens das erste Bauteil 1 zumindest teilweise mittels Heißpressens hergestellt. In vorteilhafter Weise ist erfolgt das Sintern des Bauteils zumindest anteilig inform eines isostatischen Heißpressen (HIP = hot isostatic pressure) und ist das Bauteil 1 insoweit als gehiptes Bauteil ausgebildet.

Nach einer Weiterbildung dieser Ausgestaltung der Erfindung erfolgt das Sintern bei einem hohen Arbeitsdruck von über 800 bar und/oder einer hohen Arbeitstemperatur von über 700°C, wobei Arbeitsdruck und Arbeitstemperatur im konkreten Anwendungsfall so eingestellt werden, daß eine für das Composite-Bauteil gewünschte Dichte und/oder Porosität erzielt wird. Gemäß einer Ausgestaltung der Erfindung ist ein Porositätsgrad des Composite-Bauteils, also ein Volumenanteil, der die Gesamtheit aller Poren des Composite-Bauteils bestimmt, kleiner als 10%, insb. wesentlich kleiner als 5%, gewählt.

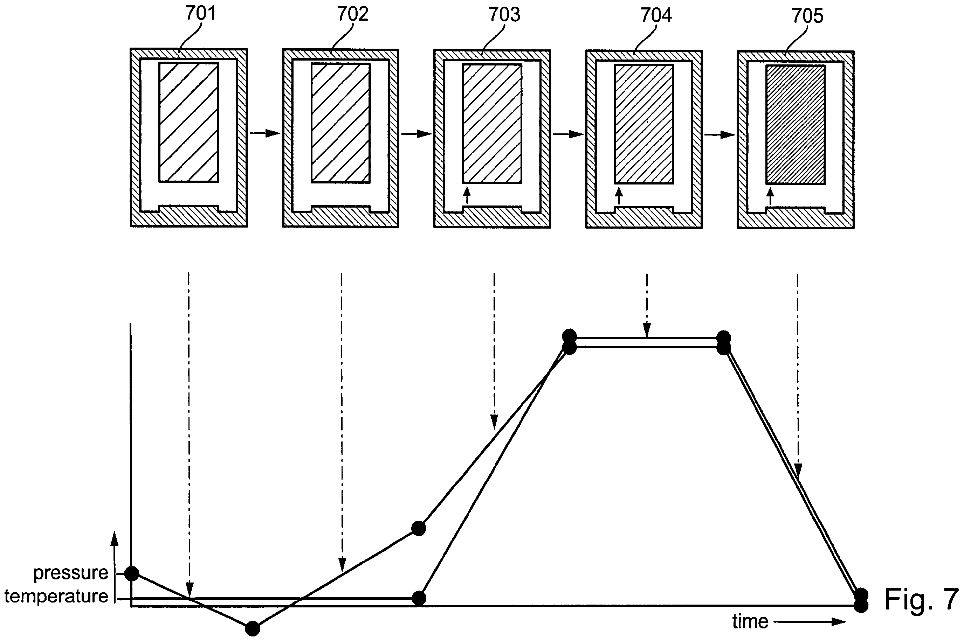

Nach einer Weiterbildung dieser Ausgestaltung der Erfindung erfolgt das Sintern in einem Sinterofen mit einstellbarem Atmosphärendruck in dessen Brennraum zunächst die beiden Materialien für das Composite-Bauteil 1 verbracht werden (Fig. 7, 701). Anschließend wird der Brennraum evakuiert, um danach mit einem inerten Schutzgas, beispielsweise Argon, NH₃-Spaltgas, Methan, Leuchtgas etc., befüllt zu werden, so daß im Brennraum ein Atmosphärendruck von 300 bar oder mehr aufgebaut wird (Fig. 7, 702). Durch Aufheizen des Brennraums auf über 700°C wird der Atmosphärendruck im Brennraum auf weit über 800 bar, beispielsweise etwa 1400 bar, gesteigert (Fig. 7, 703). Die letztlich im Brennraum eingestellte Arbeitstemperatur und der dabei anstehende Atmosphärendruck werden für eine vorgebbare, insb. vorab experimentell bestimmte, Haltezeit auf einem möglichst konstanten Niveau gehalten, so daß die verwendeten Materialien schließlich gut aneinander haften, (Fig. 7, 704). Nach dem Ablauf der Haltezeit werden Arbeitsdruck und -temperatur in geeigneter Weise mit vorab entsprechend bestimmten Zeitverläufen wieder abgebaut, (Fig. 7, 705). Nach einer weiteren Ausgestaltung der Erfindung sind die wenigstens zwei für das Bauteil 1 verwendeten Materialien hinsichtlich einer werkstofflichen Eigenschaft, wie z.B. der bereits erwähnten Schmelztemperatur, der Bruchfestigkeit und/oder dem Elastizitätsmodul, einander im wesentlichen gleich oder zumindest ähnlich.

Nach einer vorteilhaften Weiterbildung der Erfindung ist ferner vorgesehene, daß das Verbund-System weiters wenigstens auch ein drittes Bauteil 3 umfaßt, das am ersten Bauteil 1 und/oder am zweiten Bauteil 2, insb. ebenfalls stoffschlüssig, fixiert ist. Beispielsweise kann - wie bereits erwähnt - eines der Bauteile 1, 2 des Verbund-Systems ein Metallkörper sein, der auf das anderen, als Meßohr des Meßaufnehmers dienenden Bauteil aufgeschoben und daselbst fixiert ist, während das dritte Bauteil 3, wie auch in Fig. 5 schematisch dargestellt, als ein Trägerelement - beispielsweise ein Trägerrohr - des Meßaufnehmers ausgebildet ist, das mittels des insoweit als erster Koppler dienenden Metallkörpers und ggf. eines von diesem beabstandet am Meßrohr fixierten weiteren, zweiten Kopplers an das Meßrohr gekoppelt ist, vgl. hierzu auch die bereits erwähnten US-B- 68 51 323, US-B 65 19 828 oder der US-B 65 98 281, US-A 60 47 457. Gemäß einer vorteilhaften Ausgestaltung dieser Weiterbildung der Erfindung besteht das Meßrohr, wie bereits erwähnt, in überwiegendem Maße aus Titan, Tantal oder Zirkonium, während das Trägerelement überwiegend aus Stahl oder Edelstahl besteht. Ferner ist das Composite-Bauteil 1 dabei anteilig aus Stahl und in entsprechendem Maße aus Titan, Tantal oder Zirkonium oder zumindest aus einem mit dem Meßrohr stoffschlüssig verbindbaren Material aufgebaut, so daß das Composite-Bauteil 1 sowohl mit dem hier als Meßrohr ausgebildeten zweiten Bauteil als auch mit dem hier als Trägerrohr ausgebildeten dritten Bauteil 3 verlötet und/oder verschweißt werden kann. Insoweit besteht also das dritte Bauteil 3 einerseits aus einem Material, das sich hinsichtlich wenigstens einer physikalischen und/oder chemischen Eigenschaft, insb. einer Schmelztemperatur, eines Wärmeausdehnungskoeffizienten und/oder hinsichtlich des Elastizitätsmoduls etc., von einem Material des zweiten Bauteils 2 unterscheidet. Gleichermaßen kann das dritte Bauteil 3 darüber hinaus aus einem Material bestehen, das hinsichtlich wenigstens einer physikalischen und/oder chemischen Eigenschaft, insb. einer Schmelztemperatur und/oder eines Wärmeausdehnungskoeffizienten etc., zumindest insofern gleich ist mit dem Material des zweiten Bauteils 2, daß es mit diesem über die einander gleichenden Materialien stoffschlüssig verbindbar ist. Dementsprechend ist nach einer weiteren Ausgestaltung dieser Weiterbildung der Erfindung das erste Bauteil 1 sowohl mit dem zweiten Bauteil 2 als auch mit dem dritten Bauteil 3 jeweils zumindest abschnittsweise stoffschlüssig, beispielsweise durch Löten oder Schweißen, verbunden.

Es sei an dieser Stelle noch erwähnt, daß insbesondere bei der Verwendung nur eines einzigen Meßrohrs im Meßaufnehmer 100 das vorgenannte Trägerelement sowohl als Halterung für Meßrohr, Erregeranordnung sowie Sensoranordnung als auch als Gegenschwinger zum Meßrohr dienen kann, mittels dem im Betrieb allfällige Störschwingungen kompensiert oder zumindest verringert werden. Dementsprechend ist nach einer Ausgestaltung der dieser Weiterbildung der Erfindung vorgesehen, daß das dritte Bauteil 3 als ein das Meßrohr umhüllender, insb. zylindrischer und im wesentlichen koaxial zum Meßrohr ausgerichteter, Gegenschwinger des Meßaufnehmers ausgebildet ist. Nach einer anderen Ausgestaltung der vorbeschriebenen Weiterbildung ist das dritte Bauteil 3 als das bereits erwähnte, endseitig am Meßrohr fixierte und dieses umhüllende Aufnehmer-Gehäuse des Meßaufnehmers 100 ausgebildet. Gleichwohl kann auch der oben erwähnte zweite Koppler oder auch einer der oben erwähnten Flansche jeweils als das dritte Bauteil 3 des Verbund-Systems angesehen werden, daß in diesem Falle vom ersten Bauteil 1 beabstandet angeordnet und zum ersten Bauteil 1 im wesentlichen identisch ausgebildet ist.

Wie sich aus der Gesamtheit der vorangehenden Erläuterungen unschwer erkennen läßt, ist ein Vorteil der Erfindung im besonderen darin zu sehen, daß sie auch für die Anwendung auf Bauteile von Meßaufnehmern vom Vibrationstyp geeignet ist, welche Bauteile aus verschiedenen Materialien bestehen, und welche Bauteile sich in der Weise stofflich voneinander unterscheiden, daß sie auf herkömmliche Art nicht oder nur mit erheblichem fertigungstechnischen Aufwand miteinander verschweißbar oder anderweitig stoffschlüssig verbindbar wären. Somit kann unter Anwendung der vorliegenden Erfindung im Vergleich zu herkömmlichen Meßaufnehmern vom Vibrationstyp eine Auszugsfestigkeit des Verbund-Systems und insoweit auch eine Dauerfestigkeit des Verbund-Systems erheblich verbessert werden.

Neben der Maximierung der Auszugsfestigkeit des Verbund-Systems kann so auch die Vibrationsfestigkeit und somit auch eine maximal mögliche oder zulässige Schwingspielzahl für das Meßrohr erhöht werden. In Kenntnis der Erfindung und vor dem Hintergrund des eingangs referierten Standes der Technik, insb. der US-A 56 10 342, der US-A 60 47 457, der US-A 61 68 069, der US-B 65 19 828, der US-B 65 98 281 oder der WO-A 03/048693, besteht für den Fachmann auch keinerlei Schwierigkeit darin, die für die jeweilige Anwendung geeigneten Materialien für die Bauteile sowie die optimalen Parameter, sei es nun hinsichtlich der tatsächlichen Dimensionierung der Bauteile des Verbund-Systems oder auch der hinsichtlich der Einstellung der für die Fertigung verwendeten Werkzeuge und Maschinen, zu ermitteln. Gleichermaßen besteht nunmehr für den Fachmann auch keine Schwierigkeit darin, das erfindungsgemäße Verfahren entsprechend den konkreten Anforderungen an die Haltbarkeit des Verbund-Systems anzupassen und hinsichtlich der Fertigungsabläufe zu optimieren.

## Patentansprüche

1. In-Line-Meßgerät, insb. Coriolis-Massendurchfluß-Meßgerät, für ein dem Messen eines in einer Leitung strömenden Mediums dienendes Meßgerät, welcher In-Line-Meßgerät wenigstens ein mittels wenigstens eines, insb. aus Metall bestehenden, ersten Bauteils (1) und mittels wenigstens eines, insb. aus Metall bestehenden, zweiten Bauteils (2) gebildetes, insb. bi- oder polymetallisches, Verbund-System (1, 2) umfaßt,
- wobei wenigstens das erste Bauteil (1) des Verbund-Systems als ein Composite-Formteil ausgebildet ist, das aus wenigstens zwei Materialien, insb. wenigstens zwei Metallen, besteht, die sich hinsichtlich wenigstens einer physikalischen und/oder chemischen Eigenschaft, insb. einer Materialdichte, einer Schmelztemperatur, eines Wärmeausdehnungskoeffizienten und/oder hinsichtlich des Elastizitätsmoduls, voneinander unterscheiden
- **dadurch gekennzeichnet dass** wenigstens das erste Bauteil (1) des Verbund-Systems zumindest teilweise aus gesintertem Material besteht.

2. In-Line-Meßgerät nach Anspruch 1, wobei wenigstens eines der Bauteile (1, 2) zumindest teilweise aus wenigstens einem Metall besteht.

3. In-Line-Meßgerät nach dem vorherigen Anspruch, wobei sowohl das erste Bauteil als auch das das zweite Bauteil jeweils zumindest teilweise aus Metall bestehen.

4. In-Line-Meßgerät nach einem der vorherigen Ansprüche,
- wobei wenigstens eines der Bauteile zumindest teilweise aus Stahl, insb. Edelstahl, besteht; und/oder
- wobei wenigstens eines der Bauteile zumindest teilweise aus Titan, insb. einer Titan-Legierung, besteht; und/oder
- wobei wenigstens eines der Bauteile zumindest teilweise aus Tantal, insb. einer Tantal-Legierung, besteht; und/oder
- wobei wenigstens eines der Bauteile zumindest teilweise aus Zirkonium, insb. einer Zirkonium-Legierung, besteht.

5. In-Line-Meßgerät nach einem der vorherigen Ansprüche,
- wobei es sich bei jedem der wenigstens zwei Materialien des ersten Bauteils (1) um ein Metall handelt; und/oder
- wobei das erste Bauteil (1) zumindest teilweise aus Stahl und zumindest teilweise aus Titan und/oder Zirkonium und/oder Tantal besteht.

6. In-Line-Meßgerät nach einem der vorherigen Ansprüche, wobei die beiden Bauteile (1, 2) des Verbundsystems zumindest abschnittsweise, insb. mittels Löt- und/oder Schweißverbindung, miteinander stoffschlüssig verbunden sind.

7. In-Line-Meßgerät nach Anspruch 6, wobei die beiden Bauteile (1, 2) des Verbundsystems zumindest abschnittsweise mittels Löt- und/oder Schweißverbindung miteinander verbunden sind.

8. In-Line-Meßgerät nach Anspruch 6 oder 7, wobei die beiden Bauteile (1, 2) des Verbundsystems zumindest abschnittsweise über eine Diffusionszone miteinander verbunden sind.

9. In-Line-Meßgerät nach dem vorherigen Anspruch, wobei das erste Bauteil (1) unter Bildung der Diffusionszone direkt auf das zweite Bauteil (2) aufgesintert ist.

10. In-Line-Meßgerät nach einem der vorherigen Ansprüche, wobei die beiden Bauteile (1, 2) des Verbundsystems zumindest abschnittsweise, insb. mittels eines Kunststoffes, miteinander adhäsiv verbunden sind.

11. In-Line-Meßgerät nach einem der vorherigen Ansprüche,
- wobei sich eines der beiden Bauteile des Verbundsystems zumindest teilweise durch das andere Bauteil (1) entlang einer gedachten Längsachse (L) des Verbund-Systems erstreckt; und/oder
- wobei eines der wenigstens zwei Bauteile (1, 2) des Verbund-Systems das andere der wenigstens zwei Bauteile (1, 2) zumindest abschnittsweise zumindest teilweise umgreift.

12. In-Line-Meßgerät nach einem der vorherigen Ansprüche, wobei eines der wenigstens zwei Bauteile (1, 2) des Verbund-Systems mit einer zumindest teilweise gewölbten, insb. als Zylinderoberfläche ausgebildeten, äußeren Oberfläche eine innere Oberfläche des anderen der wenigstens zwei Bauteile (1, 2) des Verbund-Systems Bauteils (1) flächig kontaktiert.

13. In-Line-Meßgerät nach Anspruch 12, wobei die innere Oberfläche durch eine Innenwand einer sich zumindest in einen Teilbereich des jeweiligen Bauteils (1, 2) erstreckenden Bohrung gebildet ist.

14. In-Line-Meßgerät nach Anspruch 12 oder 13, wobei die beiden Bauteile (1, 2) des Verbundsystems zumindest anteilig einen, insb. in Richtung der Längsachse und/oder in einer Umfangsrichtung der äußeren Oberfläche des zweiten Bauteils (2) wirkenden, Preßverband bilden.

15. In-Line-Meßgerät nach einem der Ansprüche 12 bis 14, wobei auf durch die einander kontaktierenden Oberflächen der beiden Bauteile (1, 2) des Verbundsystems gebildete Wirkflächen des Verbund-Systems Einspannkräfte, insb. radial zur Längsachse ausgerichtete Normalkräfte, so einwirken, daß wenigstens eines der beiden Bauteile (1, 2) des Verbundsystems zumindest anteilig dauerhaft elastisch, insb. gemischt elastisch-plastisch, verformt ist.

16. In-Line-Meßgerät nach einem der vorherigen Ansprüche, wobei wenigstens eines der Bauteile 1, 2) zumindest teilweise dauerhaft elastischen, insb. gemischt plastisch-elastischen, Verformungen unterworfen ist.

17. In-Line-Meßgerät nach einem der vorherigen Ansprüche,
- wobei wenigstens eines der Bauteile (1, 2) des Verbundsystems ringförmig ausgebildet ist; und/oder
- wobei wenigstens eines der Bauteile (1, 2) des Verbundsystems hülsenförmig ausgebildet ist; und/oder
- wobei wenigstens eines der Bauteile (1, 2) des Verbundsystems rohrförmig ausgebildet ist; und/oder
- wobei das wenigstens eine Bauteil (1, 2) als ein zumindest abschnittsweise gerades, kreiszylindrisches Rohr ausgebildet ist.

18. In-Line-Meßgerät nach einem der vorherigen Ansprüche, wobei das Verbund-System weiters ein drittes Bauteil (3) umfaßt, das am ersten Bauteil (1) und/oder am zweiten Bauteil (2) fixiert ist.

19. In-Line-Meßgerät nach Anspruch 18, wobei das erste Bauteil (1) sowohl mit dem zweiten Bauteil (2) als auch mit dem dritten Bauteil (3) jeweils zumindest abschnittsweise stoffschlüssig verbunden ist.

20. In-Line-Meßgerät nach Anspruch 18 oder 19, wobei das dritte Bauteil (3) aus einem Material besteht, das sich hinsichtlich wenigstens einer physikalischen und/oder chemischen Eigenschaft, insb. einer Schmelztemperatur, eines Wärmeausdehnungskoeffizienten und/oder hinsichtlich des Elastizitätsmoduls, von einem Material des zweiten Bauteils (2) unterscheidet.

21. In-Line-Meßgerät nach einem der Ansprüche 18 bis 20, wobei das dritte Bauteil (3) vom ersten Bauteil (1) beabstandet angeordnet und/oder zum ersten Bauteil (1) im wesentlichen identisch ausgebildet ist.

22. In-Line-Meßgerät nach einem der vorherigen Ansprüche, wobei eines der Bauteile (1, 2) des Verbund-Systems als ein dem Führen des zu messenden Mediums dienendes, im Betrieb des In-Line-Meßgeräts vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des In-Line-Meßgeräts ausgebildet ist.

23. In-Line-Meßgerät nach Anspruch 22, wobei das erste Bauteil (1) als Meßrohr ausgebildet ist und wobei das zweite Bauteil (2) als ein auf dem Meßrohr fixierter, insb. plattenförmiger oder scheibenförmiger, Metallkörper ausgebildet ist.

24. In-Line-Meßgerät nach Anspruch 22, wobei das zweite Bauteil (2) als Meßrohr ausgebildet ist und wobei das erste Bauteil (1) als ein auf dem Meßrohr fixierter, insb. plattenförmiger oder scheibenförmiger, Metallkörper ausgebildet ist.

25. In-Line-Meßgerät nach einem der Ansprüche 1 bis 20, wobei eines der Bauteile (1, 2) des Verbund-Systems als ein dem Führen des zu messenden Mediums dienendes, im Betrieb des In-Line-Meßgeräts vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des In-Line-Meßgeräts ausgebildet ist und wobei das dritte Bauteil (3) als ein schwingfähig am des Meßrohr fixiertes und/oder das Meßrohr schwingfähig halterndes Trägerelement des In-Line-Meßgeräts ausgebildet ist.

26. In-Line-Meßgerät nach Anspruch 25, wobei das dritte Bauteil (3) als ein das Meßrohr umhüllendes Aufnehmer-Gehäuse des In-Line-Meßgeräts ausgebildet ist.

27. In-Line-Meßgerät nach Anspruch 25, wobei das dritte Bauteil (3) als ein das Meßrohr umhüllender, insb. zylindrischer und im wesentlichen koaxial zum Meßrohr ausgerichteter, Gegenschwinger des In-Line-Meßgeräts ausgebildet ist.

28. In-Line-Meßgerät nach einem der Ansprüche 22 bis 27, wobei wenigstens eines der Bauteile (1, 2, 3) des Verbund-Systems als ein an einem Ende des Meßrohrs fixierter, dem Anschließen einer als Rohrleitung ausgebildeten Leitung an das Meßrohr dienender Flansch des In-Line-Meßgeräts ausgebildet ist.

29. In-Line-Meßgerät nach einem der vorherigen Ansprüche,
- wobei jedes der wenigstens zwei voneinander verschiedenen Materialien des ersten Bauteils (1) jeweils wenigstens 1%, insb. jeweils mehr als 10%, von dessen Volumen bildet; und/oder
- wobei das erste Bauteil (1) schichtweise aus den wenigstens zwei voneinander verschiedenen Materialien aufgebaut ist, und wobei jedes der zwei Materialien eine Schichtdicke von wenigstens 1 mm aufweist; und/oder
- wobei ein Porositätsgrad des Composite-Bauteils kleiner als 10%, insb. wesentlich kleiner als 5%, gewählt ist.

30. In-Line-Meßgerät nach einem der vorherigen Ansprüche,
- wobei wenigstens eines der wenigstens zwei Materialien des ersten Bauteils (1) hinsichtlich wenigstens einer physikalischen und/oder chemischen Eigenschaft im wesentlichen gleich ist mit einem Material des zweiten Bauteils (2); und/oder
- wobei die wenigstens zwei Materialien des ersten Bauteils (1) über eine im Inneren des ersten Bauteils (1) zumindest abschnittsweise gebildeten Diffusionszone zumindest teilweise stoffschlüssig miteinander verbunden sind; und/oder
- wobei wenigstens das erste Bauteil (1) teilweise aus einem gegossenen und/oder gewalzten und/oder einem gezogenen Material besteht.

31. In-Line-Meßgerät nach einem der vorherigen Ansprüche, wobei wenigstens das erste Bauteil (1) zumindest teilweise mittels Heißpressens, insb. durchgeführt bei einem hohen Arbeitsdruck von über 800 bar und/oder einer hohen Arbeitstemperatur von über 700°C, hergestellt ist.

32. In-Line-Meßgerät nach dem vorherigen Anspruch, wobei das erste Bauteil (1) mittels isostatischen Heißpressens hergestellt ist.

## Claims

1. Inline measuring device, particularly a Coriolis mass flowmeter, for a measuring device serving to measure a medium flowing in a pipe, said inline measuring device comprising at least a composite system (1, 2), particularly bimetallic or polymetallic, formed by at least a first component (1), particularly made of metal, and by a second component (2), particularly made of metal,
- wherein at least the first component (1) of the composite system is designed as a composite molded part, which consists of at least two materials, particularly at least two metals, that differ from one another with regard to at least one physical and/or chemical property, particularly a material density, a melting temperature, a thermal expansion coefficient and/or with regard to the elasticity module, **characterized in that** at least the first component (1) of the composite system at least partially consists of sintered material.

2. Inline measuring device as claimed in Claim 1, wherein at least one of the components (1, 2) at least partially consists of at least one metal.

3. Inline measuring device as claimed in the previous claim, wherein both the first component and the second component each at least partially consist of metal.

4. Inline measuring device as claimed in one of the previous claims,
- wherein at least one of the components is at least partially made from steel, especially stainless steel; and/or
- wherein at least one of the components is at least partially made from titanium, particularly a titanium alloy; and/or
- wherein at least one of the components is at least partially made from tantalum, particularly a tantalum alloy; and/or
- wherein at least one of the components is at least partially made from zirconium, particularly a zirconium alloy;

5. Inline measuring device as claimed in one of the previous claims,
- wherein each of the at least two materials of the first component (1) is a metal; and/or
- wherein the first component (1) is at least partially made from steel and at least partially made from titanium and/or zirconium and/or tantalum.

6. Inline measuring device as claimed in one of the previous claims, wherein the two components (1, 2) of the composite system are interconnected at least in sections via material bonding, particularly via a solder connection and/or welding connection.

7. Inline measuring device as claimed in Claim 6, wherein the two components (1, 2) of the composite system are interconnected at least in sections via a solder connection and/or welding connection.

8. Inline measuring device as claimed in Claim 6 or 7, wherein the two components (1, 2) of the composite system are interconnected at least in sections via a diffusion zone.

9. Inline measuring device as claimed in the previous claim, wherein the first component (1) is sintered directly onto the second component (2), forming the diffusion zone.

10. Inline measuring device as claimed in one of the previous claims, wherein the two components (1, 2) of the composite system are adhesively interconnected at least in sections, particularly by means of a plastic.

11. Inline measuring device as claimed in one of the previous claims,
- wherein one of the two components of the composite system extends at least partially through the other component (1) along an imaginary longitudinal axis (L) of the composite system; and/or
- wherein one of the at least two components (1, 2) of the composite system at least partially surrounds the other of the at least two components (1, 2) at least in sections.

12. Inline measuring device as claimed in one of the previous claims, wherein one of the at least two components (1, 2) of the composite system comes into contact with an inner surface of the other component (1) of the at least two components (1, 2) of the composite system with an outer surface, which is at least partially curved, particularly formed as a cylindrical surface.

13. Inline measuring device as claimed in Claim 12, wherein the inner surface is formed by an interior wall of a bore which extends at least into a section of the component (1, 2).

14. Inline measuring device as claimed in Claim 12 or 13, wherein the two components (1, 2) of the composite system form a press fit at least on a proportional basis, particularly in the direction of the longitudinal axis and/or in a peripheral direction of the outer surface of the second component (2).

15. Inline measuring device as claimed in one of the Claims 12 to 14, wherein clamping forces, particularly normal forces radially aligned in relation to the longitudinal axis, act on the active surfaces of the composite system, said surfaces being formed by the surfaces of the two components (1, 2) of the composite system that contact one another, in such a way that at least one of the two components (1, 2) of the composite system is permanently deformed at least on a proportional basis in an elastic manner, particularly a mixed elastic-plastic manner.

16. Inline measuring device as claimed in one of the previous claims, wherein at least one of the components (1, 2) is at least partially permanently subject to elastic deformations, particularly mixed elastic-plastic deformations.

17. Inline measuring device as claimed in one of the previous claims,
- wherein at least one of the components (1, 2) of the composite system has an annular design; and/or
- wherein at least one of the components (1, 2) of the composite system has a sleeve-like design; and/or
- wherein at least one of the components (1, 2) of the composite system has a tubular design; and/or
- wherein the at least one component (1, 2) is designed as a cylindrical tube, which is straight at least in sections.

18. Inline measuring device as claimed in one of the previous claims, wherein the composite system further comprises a third component (3), which is fixed on the first component (1) and/or on the second component (2).

19. Inline measuring device as claimed in Claim 18, wherein the first component (1) is connected at least in sections via material bonding with both the second component (2) and with the third component (3).

20. Inline measuring device as claimed in Claim 18 or 19, wherein the third component (3) consists of a material that differs from a material of the second component (2) with regard to at least one physical and/or chemical property, particularly a melting temperature, a thermal expansion coefficient and/or with regard to the elasticity module.

21. Inline measuring device as claimed in one of the Claims 18 to 20, wherein the third component (3) is arranged at a distance from the first component (1) and/or is designed in an essentially identical manner to the first component (1).

22. Inline measuring device as claimed in one of the previous claims, wherein one of the components (1, 2) of the composite system is designed as a measuring tube of the inline measuring device which serves to conduct the medium to be measured, and vibrates during the operation of the inline measuring device, particularly at least temporarily executing flexural vibrations around an axis of vibration extending in the direction of the longitudinal axis of the composite system and/or coinciding with the longitudinal axis of the composite system.

23. Inline measuring device as claimed in Claim 22, wherein the first component (1) is designed as a measuring tube and wherein the second component (2) is designed as a metal body fixed on the measuring tube, particularly a plate-shaped or disc-shaped metal body.

24. Inline measuring device as claimed in Claim 22, wherein the second component (2) is designed as a measuring tube and wherein the first component (1) is designed as a metal body fixed on the measuring tube, particularly a plate-shaped or disc-shaped metal body.

25. Inline measuring device as claimed in one of the Claims 1 to 20, wherein one of the components (1, 2) of the composite system is designed as a measuring tube of the inline measuring device which serves to conduct the medium to be measured, and vibrates during the operation of the inline measuring device, particularly at least temporarily executing flexural vibrations around an axis of vibration extending in the direction of the longitudinal axis of the composite system and/or coinciding with the longitudinal axis of the composite system, and wherein the third component (3) is designed as a support element of the inline measuring device which is fixed on the measuring tube in an oscillatory manner and/or supports the measuring tube in an oscillatory manner.

26. Inline measuring device as claimed in Claim 25, wherein the third component (3) is designed as a sensor housing of the inline measuring device that surrounds the measuring tube.

27. Inline measuring device as claimed in Claim 25, wherein the third component (3) is designed as a counter-oscillator of the inline measuring device that surrounds the measuring tube, particularly a cylindrical counter-oscillator that is aligned in an essentially coaxial manner in relation to the measuring tube.

28. Inline measuring device as claimed in one of the Claims 22 to 27, wherein at least one of the components (1, 2, 3) of the composite system is designed as a flange of the inline measuring device, which is fixed on one end of the measuring tube and serves to connect a conduit designed as a pipe to the measuring tube.

29. Inline measuring device as claimed in one of the previous claims,
- wherein each of the at least two materials of the first component (1), which are different from one another, make up, in each case, at least 1%, particularly more than 10%, of the component's volume; and/or
- wherein the first component (1) is constructed in layers from the at least two materials, which are different from one another, and wherein each of the two materials has a layer thickness of at least 1 mm; and/or
- wherein a selected degree of porosity of the composite component is less than 10%, particularly significantly less than 5%.

30. Inline measuring device as claimed in one of the previous claims,
- wherein at least one of the at least two materials of the first component (1) is essentially identical to a material of the second component (2) with regard to at least one physical and/or chemical property; and/or
- wherein the at least two materials of the first component (1) are at least partially interconnected via material bonding via a diffusion zone formed at least in sections inside the first component (1); and/or
- wherein at least the first component (1) is partially made from a cast material and/or a rolled material and/or a drawn material.

31. Inline measuring device as claimed in one of the previous claims, wherein at least the first component (1) is manufactured at least partially by hot pressing, particularly performed at a high working pressure of over 800 bar, and/or at a high working temperature of over 700 °C.

32. Inline measuring device as claimed in the previous claim, wherein the first component (1) is manufactured using isostatic hot pressing.

## Revendications

1. Appareil de mesure en ligne, notamment un débit massique Coriolis, pour un appareil de mesure servant à la mesure d'un produit s'écoulant dans une conduite, lequel appareil de mesure en ligne comprend au moins un système composite (1, 2), notamment bimétallique ou polymétallique, formé au moyen d'au moins un premier composant (1), notamment constitué de métal, et au moyen d'au moins un deuxième composant (2),
- pour lequel au moins le premier composant (1) du système composite est conçu en tant que pièce moulée composite, qui est constituée d'au moins deux matériaux, notamment d'au moins deux métaux, qui se différencient l'un de l'autre concernant au moins une propriété physique et/ou chimique, notamment une densité de matériau, une température de fusion, un coefficient de dilatation thermique et/ou concernant le module d'élasticité
**caractérisé en ce qu'**au moins le premier composant (1) du système composite est constitué au moins partiellement d'un matériau fritté.

2. Appareil de mesure en ligne selon la revendication 1, pour lequel au moins l'un des composants (1, 2) est constitué au minimum partiellement d'au moins un métal.

3. Appareil de mesure en ligne selon la revendication précédente, pour lequel à la fois le premier composant et également le deuxième composant sont constitués au minimum partiellement de métal.

4. Appareil de mesure en ligne selon l'une des revendications précédentes,
- pour lequel au moins l'un des composants est constitué au moins partiellement d'acier, notamment d'acier inoxydable ; et/ou
- pour lequel au minimum l'un des composants est constitué au moins partiellement de titane, notamment d'un alliage de titane ; et/ou
- pour lequel au minimum l'un des composants est constitué au moins partiellement de tantale, notamment d'un alliage de tantale ; et/ou
- pour lequel au minimum l'un des composants est constitué au moins partiellement de zirconium, notamment d'un alliage de zirconium ;

5. Appareil de mesure en ligne selon l'une des revendications précédentes,
- pour lequel il s'agit pour chacun des au moins deux matériaux du premier composant (1) d'un métal ; et/ou
- pour lequel le premier composant (1) est constitué au moins partiellement d'acier et au moins partiellement de titane et/ou de zirconium et/ou de tantale.

6. Appareil de mesure en ligne selon l'une des revendications précédentes, pour lequel les deux composants (1, 2) du système composite sont liés entre eux au moins par parties par une liaison de matière, notamment au moyen d'une brasure et/ou d'une soudure.

7. Appareil de mesure en ligne selon la revendication 6, pour lequel les deux composants (1, 2) du système composite sont liés entre eux au moins par parties au moyen d'une brasure ou d'une soudure.

8. Appareil de mesure en ligne selon la revendication 6 ou 7, pour lequel les deux composants (1, 2) du système composite sont liés entre eux au moins par parties par l'intermédiaire d'une zone de diffusion.

9. Appareil de mesure en ligne selon la revendication précédente, pour lequel le premier composant (1) est fritté directement sur le deuxième composant (2) en formant la zone diffusion.

10. Appareil de mesure en ligne selon l'une des revendications précédentes, pour lequel les deux composants (1, 2) du système composite sont liés entre eux au moins par parties par une liaison adhésive, notamment au moyen d'un plastique.

11. Appareil de mesure en ligne selon l'une des revendications précédentes,
- pour lequel l'un des deux composants du système composite s'étend au moins partiellement à travers l'autre composant (1) le long d'un axe longitudinal imaginaire (L) du système composite ; et/ou
- pour lequel l'un des au moins deux composants (1, 2) du système composite entoure au moins partiellement l'autre des au moins deux composants (1, 2).

12. Appareil de mesure en ligne selon l'une des revendications précédentes, pour lequel l'un des au moins deux composants (1, 2) du système composite entre en contact par une surface extérieure au moins partiellement convexe, notamment formée en tant que surface cylindrique, avec une surface intérieure de l'autre des au moins deux composants (1, 2) du système composite.

13. Appareil de mesure en ligne selon la revendication 12, pour lequel la surface intérieure est formée par une paroi intérieure d'un alésage s'étendant au moins dans une zone partielle du composant (1, 2) respectif.

14. Appareil de mesure en ligne selon la revendication 12 ou 13, pour lequel les deux composants (1, 2) du système composite forment au moins partiellement un joint à ajustement serré, agissant notamment en direction de l'axe longitudinal et/ou dans une direction circonférentielle de la surface extérieure du deuxième composant (2).

15. Appareil de mesure en ligne selon l'une des revendications 12 à 14, pour lequel des forces de serrage, notamment des forces normales orientées en direction radiale par rapport à l'axe longitudinal, agissent sur les surfaces actives du système composite par le biais des surfaces entrant en contact l'une avec l'autre des deux composants (1, 2) du système composite, de telle sorte qu'au moins l'un des deux composants (1, 2) du système composite est déformé au moins proportionnellement de façon durablement élastique, notamment selon un modèle mixte élasto-plastique.

16. Appareil de mesure en ligne selon l'une des revendications précédentes, pour lequel au minimum l'un des composants (1, 2) est soumis au moins partiellement à des déformations durablement élastiques, notamment selon un modèle mixte élasto-plastique.

17. Appareil de mesure en ligne selon l'une des revendications précédentes,
- pour lequel au moins l'un des composants (1, 2) du système composite est formé de manière annulaire ; et/ou
- pour lequel au moins l'un des composants (1, 2) du système composite est conçu en forme de douille ; et/ou
- pour lequel au moins l'un des composants (1, 2) du système composite est conçu en forme de tube ; et/ou
- pour lequel l'au moins un composant (1, 2) est conçu en tant que tube cylindrique circulaire, au moins partiellement droit.

18. Appareil de mesure en ligne selon l'une des revendications précédentes, pour lequel le système composite comprend en outre un troisième composant (3), qui est fixé sur le premier composant (1) et/ou sur le deuxième composant (2).

19. Appareil de mesure en ligne selon la revendication 18, pour lequel le premier composant (1) est relié au moins par parties par une liaison de matière aussi bien avec le deuxième composant (2) qu'avec le troisième composant (3).

20. Appareil de mesure en ligne selon la revendication 18 ou 19, pour lequel le troisième composant (3) est constitué d'un matériau qui se différencie, concernant au moins une propriété physique et/ou chimique, notamment une température de fusion, un coefficient de dilatation thermique et/ou concernant le module d'élasticité, d'un matériau du deuxième composant (2).

21. Appareil de mesure en ligne selon l'une des revendications 18 à 20, pour lequel le troisième composant (3) est disposé à distance du premier composant (1) et/ou est conçu de manière essentiellement identique par rapport au premier composant (1).

22. Appareil de mesure en ligne selon l'une des revendications précédentes, pour lequel l'un des composants (1, 2) du système composite est conçu en tant que tube de mesure de l'appareil de mesure en ligne, servant à acheminer le produit à mesurer, vibrant pendant le fonctionnement de l'appareil de mesure en ligne, notamment exécutant au moins temporairement des vibrations de flexion autour d'un axe de vibration s'étendant en direction de l'axe longitudinal du système composite et/ou coïncidant avec l'axe longitudinal du système composite.

23. Appareil de mesure en ligne selon la revendication 22, pour lequel le premier composant (1) est conçu en tant que tube de mesure et pour lequel le deuxième composant (2) est conçu en tant que corps métallique fixé sur le tube de mesure, notamment en forme de plaque ou en forme de disque.

24. Appareil de mesure en ligne selon la revendication 22, pour lequel le deuxième composant (2) est conçu en tant que tube de mesure et pour lequel le premier composant (1) est conçu en tant que corps métallique fixé sur le tube de mesure, notamment en forme de plaque ou en forme de disque.

25. Appareil de mesure en ligne selon l'une des revendications 1 à 20, pour lequel l'un des composants (1, 2) du système composite est conçu en tant que tube de mesure de l'appareil de mesure en ligne, servant à acheminer le produit à mesurer, vibrant pendant le fonctionnement de l'appareil de mesure en ligne, notamment exécutant au moins temporairement des vibrations de flexion autour d'un axe de vibration s'étendant en direction de l'axe longitudinal du système composite et/ou coïncidant avec l'axe longitudinal du système composite, et pour lequel le troisième composant (3) est conçu en tant qu'élément support de l'appareil de mesure en ligne fixé de façon apte à vibrer sur le tube de mesure et/ou supportant de manière apte à vibrer le tube de mesure.

26. Appareil de mesure en ligne selon la revendication 25, pour lequel le troisième composant (3) est conçu en tant que boîtier de capteur de l'appareil de mesure en ligne enveloppant le tube de mesure.

27. Appareil de mesure en ligne selon la revendication 25, pour lequel le troisième composant (3) est conçu en tant que contre-vibrateur de l'appareil de mesure en ligne enveloppant le tube de mesure, notamment cylindrique et aligné pour l'essentiel de façon coaxiale par rapport au tube de mesure.

28. Appareil de mesure en ligne selon l'une des revendications 22 à 27, pour lequel au moins l'un des composants (1, 2, 3) du système composite est conçu en tant que bride de l'appareil de mesure en ligne, fixé en une extrémité du tube de mesure et servant au raccordement au tube de mesure d'une ligne conçue en tant que conduite.

29. Appareil de mesure en ligne selon l'une des revendications précédentes,
- pour lequel chacun des au moins deux matériaux différents l'un de l'autre du premier composant (1) constitue au moins 1 %, notamment plus de 10 %, de son volume ; et/ou
- pour lequel le premier composant (1) est constitué en couches des au moins deux matériaux différents l'un de l'autre, et pour lequel chacun des deux matériaux présente une épaisseur de couche d'au moins 1 mm ; et/ou
- pour lequel est choisi un degré de porosité du composant composite inférieur à 10 %, notamment nettement inférieur à 5 %.

30. Appareil de mesure en ligne selon l'une des revendications précédentes,
- pour lequel au minimum l'un des au moins deux matériaux du premier composant (1) est pour l'essentiel identique avec un matériau du deuxième composant (2) concernant au moins une propriété physique et/ou chimique ; et/ou
- pour lequel les au moins deux matériaux du premier composant (1) sont reliés entre eux au moins partiellement par une liaison de matière, par le biais d'une zone de diffusion formée au moins par parties à l'intérieur du premier composant (1) ; et/ou
- pour lequel au moins le premier composant (1) est constitué partiellement d'un matériau moulé et/ou laminé et/ou étiré.

31. Appareil de mesure en ligne selon l'une des revendications précédentes, pour lequel au minimum le premier composant (1) est fabriqué au moins partiellement par pressage à chaud, effectué notamment à une pression de travail élevée, supérieure à 800 bar, et/ou à une température de travail élevée, supérieure à 700 °C.

32. Appareil de mesure en ligne selon la revendication précédente, pour lequel le premier composant (1) est fabriqué au moyen d'un pressage à chaud isostatique.
